(19) Europäisches Patentamt / European Patent Office / Office européen des brevets

(11) **EP 2 908 174 A1**

(12) **EUROPEAN PATENT APPLICATION**

(43) Date of publication:
19.08.2015 Bulletin 2015/34

(51) Int Cl.:
*G03B 21/16* (2006.01)    *G02B 27/01* (2006.01)

(21) Application number: 15155002.7

(22) Date of filing: 13.02.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 14.02.2014  JP 2014026903
28.03.2014  JP 2014069783
09.01.2015  JP 2015003595

(71) Applicant: **Funai Electric Co., Ltd.**
**Daito-shi,**
**Osaka 574-0013 (JP)**

(72) Inventors:
• **Yamagiwa, Daisuke**
  **Daito-shi, Osaka 574-0013 (JP)**
• **Shimizu, Daisuke**
  **Daito-shi, Osaka 574-0013 (JP)**
• **Kobayashi, Tomohiro**
  **Daito-shi, Osaka 574-0013 (JP)**

(74) Representative: **Grünecker Patent- und**
**Rechtsanwälte**
**PartG mbB**
**Leopoldstraße 4**
**80802 München (DE)**

(54) **Projector**

(57)    This Projector (100-102, 301-303, 400, 800) includes a plurality of light source portions (11a-11c, 311a-311c, 811a), an optical scanning portion (3, 301c, 301d), a base portion (7, 7a, 306, 407, 807) and a heat transfer portion (6a-6d, 8a-8c, 309a-309c, 312a-312c, 315, 316a, 317a, 406a, 408a, 806a, 808a) that contacts with the light source portions, and the thermal resistance of a first heat transfer path from the light source portions to the base portion is larger than the thermal resistance of a second heat transfer path from the light source portions to the heat transfer portion.

FIG.6  FIRST EMBODIMENT

**Description**

BACKGROUND OF THE INVENTION

Field of the Invention

The present invention relates to a projector, and more particularly, it relates to a projector including a base portion mounted with a light source portion.

Description of the Background Art

A projector including a base portion mounted with a light source portion is known in general, as disclosed in International Publication No. 2006-118037, for example.

The aforementioned International Publication No. 2006-118037 discloses an optical pickup including a base mounted with a light source. The optical pickup further includes an adhesive for fixing the base and the light source to each other and a holding portion configured to hold the light source and to fix the same to the base. The holding portion is configured to transfer heat generated by the light source to the base.

However, the optical pickup disclosed in the aforementioned International Publication No. 2006-118037 is so configured that, when a plurality of light sources are mounted on the base, heat generated by all light sources is transferred to the same base portion (base), and hence the light sources may disadvantageously thermally interfere with each other through the base portion. When a first one of the plurality of light sources is cooled, for example, heat generated by a second one may reach the first light source through the base portion, and hence heat generated by the first light source and that reaching the same from the second light source may conceivably exceed the ability for cooling the first light source. In this case, it may conceivably be difficult to control the temperature of the first light source.

SUMMARY OF THE INVENTION

The present invention has been proposed in order to solve the aforementioned problem, and an object of the present invention is to provide a projector capable of preventing temperature control of a plurality of light source portions from becoming difficult.

In order to attain the aforementioned object, a projector according to an aspect of the present invention includes a plurality of light source portions, an optical scanning portion reflecting and scanning light emitted from the light source portions, a base portion mounted with the light source portions and a heat transfer portion that contacts with the light source portions, and the thermal resistance of a first heat transfer path from the light source portions to the base portion is larger than the thermal resistance of a second heat transfer path from the light source portions to the heat transfer portion. In this specification, the term "thermal resistance" denotes a value obtained by multiplying a contact area with a heat source, the length of a heat radiation path (the distance to a next component) and heat conductivity by each other, for example. When a plurality of components are present on a heat transfer path, the thermal resistance is described as a term denoting the sum of values obtained by performing the aforementioned multiplication on the plurality of components.

In the projector according to the aspect of the present invention, as hereinabove described, the thermal resistance of the first heat transfer path from the light source portions to the base portion is larger than the thermal resistance of the second heat transfer path from the light source portions to the heat transfer portion, whereby the quantity of heat transferred from the light source portions to the base portion is smaller than that of heat transferred from the light source portions to the heat transfer portion. Thus, the light source portions can be prevented from thermally interfering with each other through the base portion. Consequently, temperature control of the plurality of light source portions can be prevented from becoming difficult.

The aforementioned projector according to the aspect preferably further includes a mounting base portion arranged between the light source portions and the base portion and mounted on the base portion integrally with the light source portions, and the thermal resistance of the mounting base portion is preferably smaller than the thermal resistance of the base portion. According to this structure, the mounting base portion can be made of metal, whereby a press-fitting engaging method can be employed when mounting (fitting) the light source portions on (to) the base portion (the mounting base portion). Consequently, the light source portions can be prevented from misregistration or inclination resulting from thermal expansion of an adhesive due to the press-fitting engaging method, dissimilarly to a method of mounting the light source portions on the base portion (or the mounting base portion) with an adhesive.

The aforementioned projector according to the aspect preferably further includes a heat radiation portion arranged at a position separated from the base portion, the heat transfer portion preferably includes a first heat transfer portion that contacts with the light source portions and a second heat transfer portion that contacts with the first heat transfer portion and the heat radiation portion, the light source portions are preferably position-aligned and mounted on the base portion, the second heat transfer portion preferably includes a third heat transfer portion including a recess portion in which the first heat transfer portion is at least partially arranged and a fourth heat transfer portion provided to fill up a clearance between the first heat transfer portion and the recess portion and made of a material deformable in response to the clearance, and the recess portion preferably has inner side surfaces opposed to each other in a direction where mounting positions of the light source portions are aligned. According to this structure, the fourth heat transfer portion can reliably transfer heat generated by the light source portions to the heat radiation portion even if the dimension or the shape of the clearance between the light source portions and the first heat transfer portion and the recess portion of the third heat transfer portion changes due to dispersion in the mounting positions of the light source portions (and the first heat transfer portion) with respect to the base portion or the like. Consequently, the mounting positions of the light source portions with respect to the base portion can be aligned when the light source portions are mounted on the base portion, and temperature control of the light source portions can be prevented from becoming difficult.

In this case, the recess portion of the third heat transfer portion is preferably dividable along a direction parallel to the inner side surface arranged on the side of the heat radiation portion. According to this structure, a portion of a second divided portion of the third heat transfer portion constituting the recess portion can be combined after dividing the third heat transfer portion and arranging the first heat transfer portion in a portion of a first divided portion of the third heat transfer portion constituting the recess portion, when arranging the first heat transfer portion in the recess portion of the third heat transfer portion.

In the aforementioned projector including the third heat transfer portion having the recess portion, at least part of the third heat transfer portion and the heat radiation portion are preferably integrally formed. According to this structure, the number of components can be reduced dissimilarly to a case of providing the third heat transfer portion and the heat radiation portion separately from each other, whereby the structure of a light source device can be simplified.

The aforementioned projector according to the aspect preferably further includes a heat radiation portion arranged at a position separated from the base portion, the heat transfer portion preferably includes a first heat transfer portion that contacts with the light source portions and a second heat transfer portion that contacts with the first heat transfer portion and the heat radiation portion, the light source portions are preferably position-aligned and mounted on the base portion, the first heat transfer portion preferably includes a first side surface in a direction opposite to the direction where the light source portions emit light, the second heat transfer portion preferably includes a second side surface parallel to the first side surface, and the first heat transfer portion and the second heat transfer portion are preferably arranged in a state where the first side surface and the second side surface are in surface contact with each other. According to this structure, the first heat transfer portion and the second heat transfer portion can be easily formed to be relatively movable while a contact area therebetween is increased as compared with a case where the first and second heat transfer portions are in point contact or line contact with each other, whereby heat generated by the light source portions can be efficiently transferred. Further, the first and second side surfaces are parallel to each other, whereby the first and second heat transfer portions can be relatively moved while maintaining the state where the first and second side surfaces are in surface contact with each other. Consequently, the mounting positions of the light source portions with respect to the base portion can be aligned when mounting the light source portions on the base portion, and temperature control of the light source portions can be prevented from becoming difficult. The term "surface contact", generally indicating that the first and second heat transfer portions are directly in contact with each other on the surfaces thereof, indicates a wider concept also including a case where the first and second heat transfer portions are indirectly in contact with each other through a thin grease layer or the like.

In this case, the first heat transfer portion preferably includes a third side surface which is an outer surface in a direction perpendicular to the optical axes of the light source portions, the second heat transfer portion preferably includes a fourth side surface which is an inner side surface opposed to the third side surface, and a clearance is preferably provided between the third side surface and the fourth side surface. According to this structure, the mounting positions of the light source portions and the first heat transfer portion can be aligned due to the clearance provided between the third side surface and the fourth side surface.

In the aforementioned projector in which the first side surface and the second side surface are arranged in surface contact with each other, the light source portions preferably have columnar stems, the projector preferably further includes a mounting base portion arranged between the light source portions and the base portion and mounted with the light source portions, the mounting base portion preferably includes a first support portion provided at a prescribed angular interval along the outer peripheral surfaces of the stems to be in contact with the outer peripheral surfaces of the stems, and the first heat transfer portion preferably includes a second support portion provided at a prescribed angular interval along the outer peripheral surfaces of the stems to be in contact with portions of the outer peripheral surfaces of the stems not supported by the first support portion. According to this structure, the first support portion of the mounting base portion comes into contact with the outer peripheral surfaces of the stems, whereby the mounting base portion can be precisely mounted with respect to central positions of the stems of the light source portions. Thus, precision in a mounting position of the mounting base portion with respect to the light source portions can be improved.

Further, the second support portion of the first heat transfer portion comes into contact with the portions of the outer peripheral surfaces of the stems not supported by the first support portion, whereby contact areas between the light source portions and the first heat transfer portion can be increased as compared with a case where no second support portion is provided. Thus, heat from the light source portions can be efficiently transferred to the first heat transfer portion. Consequently, heat from the light source portions can be efficiently transferred to the first heat transfer portion while improving precision in the mounting position of the mounting base portion with respect to the light source portions.

In this case, the stems preferably have front surfaces on the side where the light source portions emit light and back surfaces on the side opposite to the direction where the light source portions emit light, the mounting base portion preferably includes a front surface support portion coming into contact with and supporting the front surfaces of the stems, and the first heat transfer portion preferably includes a back surface support portion coming into contact with and supporting the back surfaces of the stems. According to this structure, the front surface support portion comes into contact with the front surfaces thereby preventing misregistration of the light source portions with respect to the mounting base portion in a tilting direction, whereby the light source portions can be precisely mounted with respect to the mounting portion. Further, the back surface support portion comes into contact with the base surfaces, whereby heat from the light source portions can be transferred to the first heat transfer portion also from the back surface support portion in addition to the second support portion. Consequently, the contact areas between the light source portions and the first heat transfer portion can be increased, whereby heat from the light source portions can be more efficiently transferred to the first heat transfer portion.

In the aforementioned projector including the first support portion and the second support portion, a region where the second support portion is in contact with the outer peripheral surfaces of the stems is preferably larger than a region where the first support portion is in contact with the outer peripheral surfaces of the stems. According to this structure, the a region where the second support portion is in contact with the outer peripheral surfaces of the stems can be relatively enlarged, whereby the area where the second support portion (the first heat transfer portion) comes into contact with the outer peripheral surfaces (the light source portions) of the stems is enlarged and hence heat from the light source portions can be further efficiently transferred to the first heat transfer portion. Consequently, heat from the light source portions can be further efficiently transferred to the first heat transfer portion through the second support portion having a large contact area while improving precision in the mounting position of the mounting base portion with respect to the light source portions through the first support portion.

In the aforementioned projector including the first support portion and the second support portion, the length of the first support portion and the length of the second support portion are preferably both smaller than the length of the stems in the direction of the optical axes of the light source portions. According to this structure, the first and second support portions can be prevented from interfering with each other in the direction of the optical axes of the light source portions. Thus, the light source portions and the first heat transfer portion can be prevented from formation of clearances therebetween resulting from mutual interference between the first and second support portions, whereby the light source portions and the first heat transfer portion can be prevented from entering noncontact states. Consequently, heat from the heat source portions can be more reliably transferred to the first heat transfer portion.

In the aforementioned projector including the first support portion and the second support portion, the mounting base portion preferably includes a contact surface coming into contact with the base portion, and the mounting base portion and the first heat transfer portion are preferably arranged to parallelize the contact surface of the mounting base portion and the first side surface of the first heat transfer portion to each other. According to this structure, the contact surface and the first and second side surfaces are arranged to be parallel to each other respectively and hence the first side surface of the first heat transfer portion and the second side surface of the second heat transfer portion can be maintained in the surface contact state, also when the mounting base portion is position-aligned with respect to the base portion in a direction parallel to the contact surface.

In the aforementioned projector including the first support portion and the second support portion, the mounting base portion preferably has light transmissivity, and the base portion preferably has a light shielding property. According to this structure, the mounting base portion can be fixed to the base portion by laser welding when the mounting base portion is mounted on the base portion. Consequently, the mounting base portion can be more reliably fixed to the base portion in a state where the mounting base portion is prevented from misregistration with respect to the base portion, as compared with a case of employing an adhesive.

The aforementioned projector including the first support portion and the second support portion preferably further includes an elastic member mounted on the mounting base portion, and the first heat transfer portion is preferably mounted on the mounting base portion by the elastic member. According to this structure, the first heat transfer portion can be mounted on the mounting base portion while preventing application of excess force to the first heat transfer portion and the mounting base portion due to elastic deformation of the elastic member also when the first heat transfer portion and the mounting base portion are position-aligned.

The aforementioned projector according to the aspect preferably further includes a heat radiation portion arranged at a position separated from the base portion, the heat transfer portion preferably includes a first heat transfer portion that contacts with the light source portions and a second heat transfer portion that contacts with the first heat transfer portion and the heat radiation portion, the heat radiation portion preferably includes an element having a cooling function, and a surface of the first heat transfer portion excluding the boundary surface between the first heat transfer portion and the light source portions or a surface of the second heat transfer portion excluding the boundary surface between the second heat transfer portion and the first heat transfer portion is preferably at least partially covered with a heat shielding member. According to this structure, the element having a cooling function can cool the light source portions also when the external temperature of the light source device is relatively high. When the temperature of the first or second heat transfer portion is lower than the external temperature other than the light source portions due to the element having a cooling function, the first and second heat transfer portions absorb excess heat from the exterior other than the light source portions, and hence the size of the element having a cooling function must be increased. With respect to this point, the surface of the first heat transfer portion excluding the boundary surface between the first heat transfer portion and the light source portions or the surface of the second heat transfer portion excluding the boundary surface between the second heat transfer portion and the first heat transfer portion is at least partially covered with the heat shielding member according to the present invention, whereby the first and second heat transfer portions can be prevented from absorbing excess heat from the exterior other than the light source portions. Thus, the element having a cooling function can be prevented from size increase.

According to the present invention, as hereinabove described, temperature control of the plurality of light source portions can be prevented from becoming difficult.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 illustrates a state where a headup display according to a first embodiment of the present invention is loaded on an automobile;

Fig. 2 is a block diagram showing the overall structure of the headup display according to the first embodiment of the present invention;

Fig. 3 is a perspective view showing the structure of a light source device according to the first embodiment of the present invention;

Fig. 4 is an enlarged plan view showing the structure of part of the light source device according to the first embodiment of the present invention;

Fig. 5 is an enlarged perspective view showing the structure of part of the light source device according to the first embodiment of the present invention;

Fig. 6 is a sectional view taken along the line 500-500 in Fig. 4;

Fig. 7 illustrates part of the light source device according to the first embodiment of the present invention as viewed from a direction opposite to the direction where laser diodes emit laser beams;

Fig. 8 is a sectional view showing the structure of a light source device according to a second embodiment of the present invention;

Fig. 9 is a plan view showing the structure of a heat transfer member according to the second embodiment of the present invention;

Fig. 10 is a partially fragmented perspective view showing the structure of a light source device according to a third embodiment of the present invention;

Fig. 11 is a block diagram showing the overall structure of a headup display according to each of fourth to sixth embodiments of the present invention;

Fig. 12 is a perspective view showing the overall structure of a light source device according to the fourth embodiment of the present invention;

Fig. 13 is an enlarged perspective view showing the structure of part of the light source device according to the fourth embodiment of the present invention;

Fig. 14 is a diagram for illustrating alignment of a mounting position of a laser diode according to the fourth embodiment of the present invention;

Fig. 15 is an enlarged plan view showing the structure of part of the light source device according to the fourth embodiment of the present invention;

Fig. 16 is a sectional view taken along the line 600-600 in Fig. 15;

Fig. 17 is a front elevational view showing the structure of a heat transfer member according to the fourth embodiment of the present invention;

Fig. 18 is a sectional view showing the structure of a light source device according to the fifth embodiment of the present invention;

Fig. 19 is a front elevational view showing the structures of heat transfer members according to the fifth embodiment of the present invention;

Fig. 20 is a sectional view showing the structure of a light source device according to the sixth embodiment of the present invention;

Fig. 21 is a sectional view (1) showing the structure of a light source device according to a seventh embodiment of the present invention;

Fig. 22 is a sectional view (2) showing the structure of the light source device according to the seventh embodiment of the present invention;

Fig. 23 is an exploded perspective view (1) showing the structure of a light source device according to an eighth embodiment of the present invention;

Fig. 24 is a sectional view showing the structure of the light source device according to the eighth embodiment of the present invention;

Fig. 25 illustrates the structure of a mounting base portion according to the eighth embodiment of the present invention as viewed along arrow Y2;

Fig. 26 is a sectional view showing the structure of part of the light source device according to the eighth embodiment of the present invention;

Fig. 27 is a perspective view showing the structure of the mounting base portion according to the eighth embodiment of the present invention;

Fig. 28 is an exploded perspective view (2) showing the structure of the light source device according to the eighth embodiment of the present invention;

Fig. 29 illustrates the structure of an LD plate according to the eighth embodiment of the present invention as viewed along arrow Y1;

Fig. 30 is a sectional view showing the structure of part of the light source device according to the eighth embodiment of the present invention; and

Fig. 31 is an enlarged perspective view showing the structure of a light source device according to a modification of the first embodiment of the present invention.

## DESCRIPTION OF THE PREFERRED EMBODIMENTS

Embodiments of the present invention are now described with reference to the drawings.

(First Embodiment)

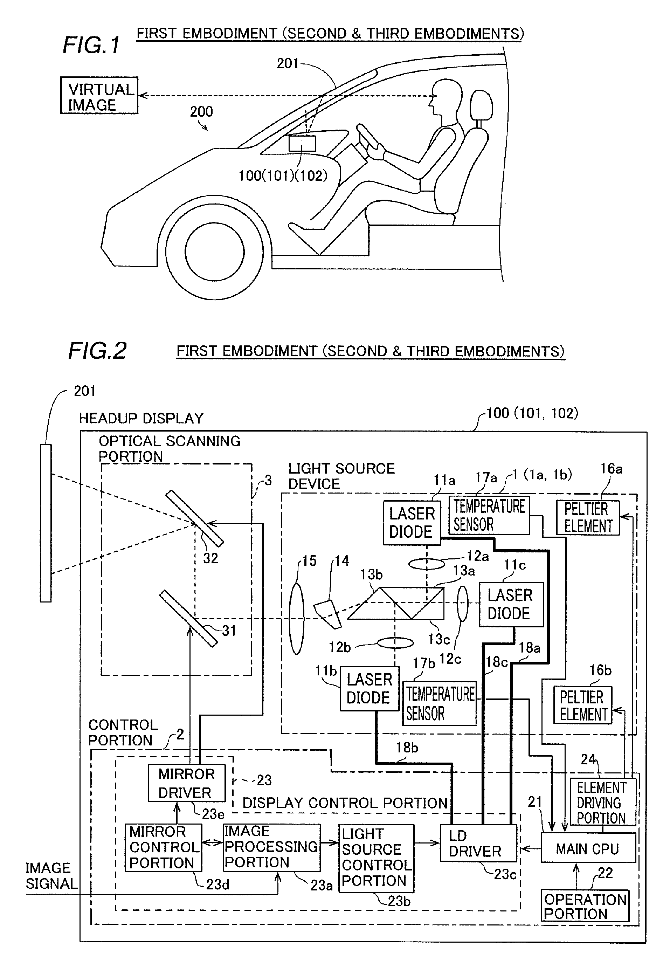

The structure of a headup display 100 according to a first embodiment of the present invention is described with reference to Figs. 1 to 7. The headup display 100 is an example of the "projector" in the present invention.

As shown in Fig. 1, the headup display 100 according to the first embodiment of the present invention is configured to be loaded on a transportation apparatus such as an automobile 200. The headup display 100 is configured to apply laser beams to a screen 201 such as a windshield, so that a user can visually recognize a virtual image (image) on the outside of the automobile 200 in front of the screen 201. The headup display 100 has a function of displaying images of information related to car navigation, information related to the automobile 200 and the like on the screen 201.

As shown in Fig. 2, the headup display 100 includes a light source device 1, a control portion 2 and an optical scanning portion 3.

The light source device 1 of the headup display 100 includes laser diodes 11a (red (R)), 11b (green (G)) and 11c (blue (B)), collimator lenses 12a to 12c, polarizing prisms 13a to 13c, a beam shaping prism 14, a condensing lens 15, Peltier elements 16a and 16b, temperature sensors 17a and 17b and flexible printed boards 18a to 18c. The laser diodes 11a to 11c are examples of the "light source portions" in the present invention. The Peltier elements 16a and 16b are examples of the "element having a cooling function" or the "heat radiation portion" in the present invention.

As shown in Fig. 2, the collimator lenses 12a to 12c are configured to correct optical axes of laser beams emitted from the laser diodes 11a to 11c to be parallel to each other. The polarizing prisms 13a to 13c are configured to control the three laser beams parallelized to each other by the collimator lenses 12a to 12c to have the same optical axes. The beam shaping prism 14 is configured to shape spots of the laser beams (convert the same from elliptic shapes to substantially circular shapes, for example) with a light-emitting surface of the polarizing prism 13c and that of the beam shaping prism 14. The headup display 100 is so configured that laser beams emitted from the beam shaping prism 14 are introduced into the optical scanning portion 3 through the condensing lens 15.

The Peltier element 16a is configured to be supplied with power from an element driving portion 24 described later thereby lowering the temperature of (absorbing heat from) a first surface side (the side of the laser diode 11a) and making a second surface side (the side of a heat sink 5a described later) generate heat (radiate the heat absorbed on the first surface side). The Peltier element 16b is also configured to lower the temperature of (adsorbs heat from) a first surface side (the side of the laser diode 11b) and to make a second surface side (the side of a heat sink 5b described later) generate heat (radiate the heat adsorbed on the first surface side). In other words, the Peltier elements 16a and 16b have cooling functions with respect to the first surface sides. The Peltier elements 16a and 16b are so configured that the quantities of heat absorption are controllable in response to the magnitude of the power supplied from the element driving portion 24.

The temperature sensor 17a is arranged in the vicinity of the laser diode 11a, and configured to be capable of detecting the temperature of the laser diode 11a. Further, the temperature sensor 17a is connected with a main CPU (Central Processing Unit) 21 described later, and configured to transmit information of the detected temperature to the main CPU 21. Similarly to the temperature sensor 17a, the temperature sensor 17b is configured to be capable of detecting the temperature of the laser diode 11b, and to transmit information of the detected temperature to the main CPU 21.

The flexible printed boards 18a to 18c are provided between an LD (laser diode) driver 23c described later and the respective ones of the laser diodes 11a to 11c, and configured to be capable of supplying power from the LD driver 23c to the respective ones of the laser diodes 11a to 11c.

As shown in Fig. 2, the control portion 2 of the headup display 100 includes the main CPU 21, an operation portion 22, a display control portion 23 and the element driving portion 24. The main CPU 21 is configured to control respective portions of the headup display 100 by transmitting control signals thereto.

The main CPU 21 is configured to acquire information of the temperatures of the laser diodes 11a and 11b from the temperature sensors 17a and 17b and to control the quantities of heat absorption of the Peltier elements 16a and 16b (the temperatures of the laser diodes 11a and 11b) on the basis of the acquired information of the temperatures. More specifically, the main CPU 21 is configured to control the Peltier element 16a so that the laser diode 11a emitting a red laser beam keeps a temperature of at least 5°C and not more than 10°C. Further, the main CPU 21 is configured to control the Peltier element 16b so that the laser diode 11b emitting a green laser beam keeps a temperature of about 25°C. On the other hand, the laser diode 11c emitting a blue laser beam is provided with no Peltier element, and configured to naturally radiate heat from the heat sink 5b.

The operation portion 22 is configured to be capable of accepting operations by the user. For example, the operation portion 22 is configured to be capable of accepting an operation of turning on the headup display 100, that of changing a projection angle of an image projected on the screen 201, that of changing the resolution of the image projected on the screen 201 and the like.

As shown in Fig. 2, the display control portion 23 includes an image processing portion 23a, a light source control portion 23b, the LD driver 23c, a mirror control portion 23d and a mirror driver 23e.

The image processing portion 23a is configured to output image information to the light source control portion 23b and the mirror control portion 23d on the basis of an externally input image signal. The light source control portion 23b is configured to control application of the laser beams from the laser diodes 11a to 11c by controlling the LD driver 23b on the basis of the image information received from the image processing portion 23a.

The mirror control portion 23d is configured to control the mirror driver 23e by transmitting a prescribed control signal thereto. The mirror driver 23e is configured to drive MEMS (Micro Electro Mechanical Systems) mirrors 31 and 32 described later by supplying power thereto on the basis of the control signal received from the mirror control portion 23d.

As shown in Fig. 2, the element driving portion 24 is configured to drive the Peltier elements 16a and 16b by supplying power thereto on the basis of the control signal received from the main CPU 21.

The optical scanning portion 3 of the headup display 100 is provided with the MEMS mirrors 31 and 32, as shown in Fig. 2. The MEMS mirrors 31 and 32 are configured to scan the laser beams emitted from the light source device 1 in the horizontal and vertical directions of the screen 201 and to project an image on the screen 201.

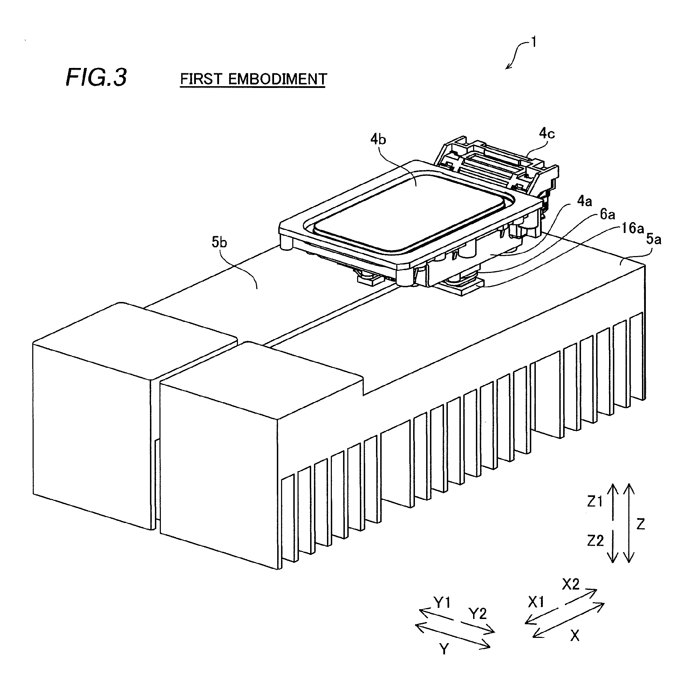

According to the first embodiment, the light source device 1 is provided with a case body portion 4a made of resin or the like and provided therein with a housing portion 7 (base portion) described later and the like, a case upper surface portion 4b and a case light-emitting portion 4c made of resin or the like, heat sinks 5a and 5b made of metal such as aluminum, a heat transfer member 6a made of metal such as aluminum (or resin higher in heat conductivity than general resin) and the Peltier element 16a, as shown in Fig. 3.

The heat sinks 5a and 5b are arranged to be adjacent to each other in plan view (as viewed along arrow Z1), as shown in Fig. 3. The Peltier element 16a is arranged on the upper surface (the surface along arrow Z1 in Fig. 3) of the heat sink 5a. The upper surface (the surface along arrow Z1) of the Peltier element 16a and the lower surface (the surface along arrow Z2) of the heat transfer member 6a are fixed to each other in a state in contact with each other. The heat sinks 5a and 5b are examples of the "heat radiation portion" in the present invention. The heat transfer member 6a is an example of the "second heat transfer portion" or the "heat transfer portion" in the present invention.

As shown in Fig. 3, the heat sink 5a is provided in the form of a planar surface on a first side (the side along arrow Z1 in Fig. 3) where the Peltier element 16a is arranged, and provided with fins on a second side (the side along arrow Z2 in Fig. 3) where no Peltier element 16a is arranged. The heat sink 5a is configured to be capable of radiating heat transferred from the Peltier element 16a in a direction (along arrow Z2 in Fig. 3) different from the side where the case body portion 4a (housing portion 7 etc.) is arranged through the fins. The heat sink 5b is also provided with fins similarly to the heat sink 5a, and configured to be capable of radiating heat in the direction (the side along arrow Z2 in Fig. 3) different from the side where the case body portion 4a (housing portion 7 etc.) is arranged through the fins. The heat sinks 5a and 5b are arranged to be adjacent to each other at a prescribed interval, so that no heat is transferred therebetween.

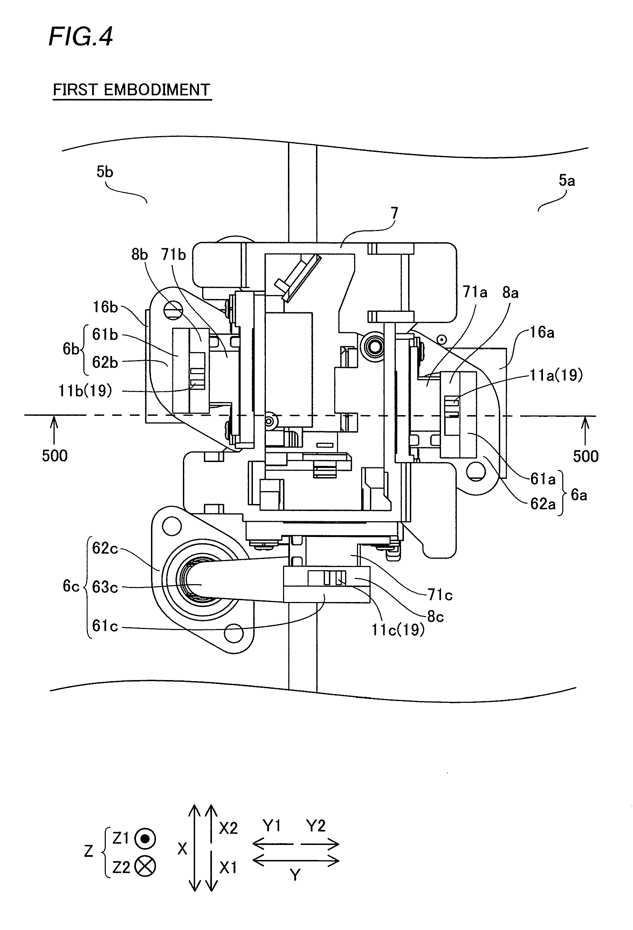

According to the first embodiment, the laser diode 11a emitting the red laser beam is mounted on a first side surface (the side surface along arrow Y2) of the housing portion 7 to emit the laser beam in the inner direction (the direction along arrow Y1) of the housing portion 7, as shown in Fig. 4. The laser diode 11b emitting the green laser beam is mounted on a second side surface (the side surface along arrow Y1) of the housing portion 7 to emit the laser beam in the inner direction (the direction along arrow Y2) of the housing portion 7. Further, the laser diode 11c emitting the blue laser beam is mounted on a rear side surface (the side surface along arrow X1) of the housing portion 7 to emit the laser beam in the inner direction (the direction along arrow X2) of the housing portion 7.

According to the first embodiment, LD (laser diode) plates 8a to 8c made of metal such as aluminum (or resin higher in heat conductivity than general resin) are arranged on back surface sides (in directions opposite to the directions where the laser diodes 11a to 11c emit the laser beams) of the laser diodes 11a to 11c respectively, and provided to be capable of transferring heat from the back surfaces of the laser diodes 11a to 11c to the side of the heat sinks 5a and 5b (the side along arrow Z2 in Fig. 4), as shown in Fig. 4. The laser diodes 11a to 11c are so configured that mounting positions thereof are aligned in directions perpendicular to the optical axes of the laser diodes 11a to 11c (directions parallel to the back surfaces of the laser diodes 11a to 11c) when the same are mounted on the housing portion 7. The heat transfer member 6a and heat transfer members 6b and 6c are configured to be capable of transferring heat generated by the position-aligned laser diodes 11a to 11c to the side of the heat sinks 5a and 5b (the side along arrow Z2) on any positions in the range where the mounting positions of the laser diodes 11a to 11c are aligned in the directions parallel to the back surfaces of the respective ones of the laser diodes 11a to 11c. The LD plates 8a to 8c are examples of the "first heat transfer portion" or "heat transfer portion" in the present invention. The heat transfer members 6b and 6c are examples of the "second heat transfer portion" or the "heat transfer portion" in the present invention.

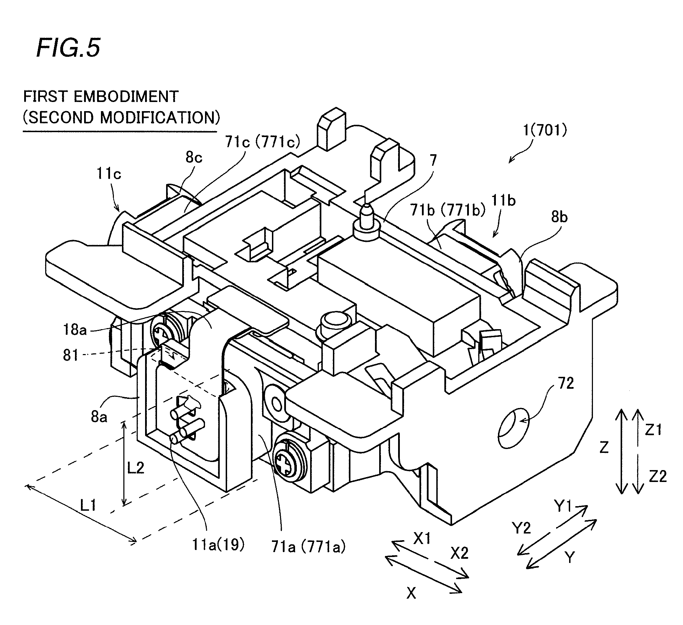

More specifically, the laser diode 11a and the LD plate 8a are fixed to each other with an adhesive or the like in a state where the side of the back surface (the side along arrow Y2) of the laser diode 11a and the LD plate 8a are in surface contact with each other before the laser diode 11a is mounted on the housing portion 7, as shown in Fig. 5. Thus, the headup display 100 is so configured that heat from the laser diode 11a is transferred to the LD plate 8a. The LD plates 8b and 8c are also provided to be in surface contact with the back surfaces of the laser diodes 11b and 11c respectively, similarly to the LD plate 8a.

As shown in Fig. 5, the laser diode 11a is so configured that the mounting position thereof with respect to the housing portion 7 is aligned in a direction (along arrow X or Z) parallel to the back surface of the laser diode 11a integrally with a mounting base portion 71a made of resin or the like for fixing the laser diode 11a to the housing portion 7 when the laser diode 11a is mounted on the housing portion 7. The headup display 100 is configured to partially weld and fix the mounting base portion 71a and the housing portion 7 to each other after integrally aligning the mounting positions of the laser diode 11a, the LD plate 8a and the mounting base portion 71a with respect to the housing portion 7. The headup display 100 is configured to also align the mounting positions of the laser diodes 11b and 11c similarly to that of the laser diode 11a.

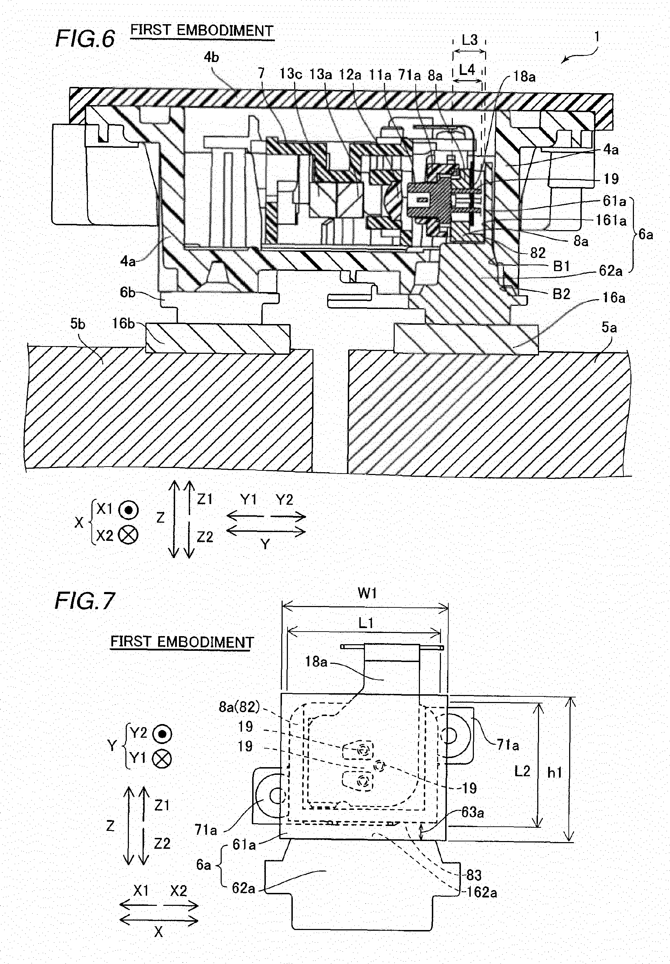

The mounting positions of the laser diodes 11a to 11c are so aligned in the aforementioned manner that the optical axes of the laser beams emitted from the laser diodes 11a to 11c through a light-emitting portion 72 provided on the front surface side (the side along arrow X2) of the housing portion 7 are coaxially superposed with each other through the collimator lenses 12a to 12c and the polarizing prisms 13a to 13c provided in the aforementioned housing portion 7, as shown in Figs. 5 and 6. As shown in Fig. 5, the laser diodes 11a to 11c are movable in the range of lengths L1 and L2 along arrows X (Y) and Z for the aforementioned alignment of the mounting positions. The headup display 100 is so configured that the laser beams emitted from the housing 7 are projected on the screen 201 through the MEMS mirrors 31 and 32 of the optical scanning portion 3, as hereinabove described.

According to the first embodiment, the laser diode 11a includes three electrodes 19 provided to project from the laser diode 11a toward the back surface side (the side along arrow Y2) thereof, as shown in Fig. 6. The length L3 of the LD plate 8a in the extensional direction (along arrow Y2) of the electrodes 19 is larger than the length L4 of the electrodes 19. In other words, the lengths L3 and L4 are in the following relation (1):

$$L3 > L4 \ldots (1)$$

According to the first embodiment, the light source device 1 includes the flexible printed board 18a capable of supplying power to the laser diode 11a, as shown in Fig. 5. A portion of the LD plate 8a on the side along arrow Y2 is provided in a U-shaped manner as viewed from the back surface side (the side along arrow Y2) of the laser diode 11a. The LD plate 8a is provided with an opening 81 on a side (the side along arrow Z1) opposite to the heat sink 5a. The flexible printed board 18a is connected to the electrodes 19 with solder or the like through the opening 81 of the LD plate 8a, and configured to supply power to the laser diode 11a. The LD plates 8b and 8c are also provided with openings similarly to the LD plate 8a, and the flexible printed boards 18b and 18c are also configured to be capable of supplying power to the respective ones of the laser diodes 11b and 11b through the openings, similarly to the flexible printed board 18a.

According to the first embodiment, the heat transfer member 6a is arranged between the LD plate 8a and the heat sink 5a and provided to be capable of transferring heat from the LD plate 8a to the Peltier element 16a (the heat sink 5a), as shown in Figs. 6 and 7. More specifically, the heat transfer member 6a includes an upper heat transfer portion 61a and a lower heat transfer portion 62a, and the upper heat transfer portion 61a is rectangularly formed as viewed from the back surface side (the side along arrow Y2) of the laser diode 11a, as shown in Fig. 6. Further, the upper heat transfer portion 61a includes a side surface 161a parallel to a surface 82 of the LD plate 8a on a side (the side along arrow Y2) opposite to the laser diode 11a, while the LD plate 8a and the upper heat transfer portion 61a are arranged in a state where the surface 82 and the side surface 161a are in surface contact with each other. In other words, the laser diode 11a and the upper heat transfer portion 61a are arranged to hold the LD plate 8a therebetween in the surface contact state on the back surface side (the side along arrow Y2) of the laser diode 11a. Thus, the headup display 100 is so configured that heat from the laser diode 11a is transferred to the LD plate 8a as well as to the upper heat transfer portion 61a. The surface 82 is an example of the "first side surface" in the present invention. The side surface 161a is an example of the "second side surface" in the present invention.

As shown in Fig. 6, the lower heat transfer portion 62a is arranged on a side (the side along arrow Z2) of the upper heat transfer portion 61a closer to the heat sink 5a, and the upper and lower heat transfer portions 61a and 62a are integrally formed. Thus, the upper heat transfer portion 61a is configured to transfer heat received from the LD plate 8a to the lower heat transfer portion 62a. The lower heat transfer portion 62a and the case body portion 4a are arranged to be fixed to each other with an adhesive or the like in regions B1 and B2 where the lower heat transfer portion 62a and the case body portion 4a are in contact with each other.

According to the first embodiment, the LD plate 8a includes an outer side surface 83 in a direction orthogonal to the direction where the laser diode 11a emits the laser beam, as shown in Fig. 7. The lower heat transfer portion 62a includes a side surface 162a opposed to the outer side surface 83 of the LD plate 8a. A clearance 63a is provided between the outer side surface 83 of the LD plate 8a and the side surface 162a of the lower heat transfer portion 62a. The outer side surface 83 is an example of the "third side surface" in the present invention. The side surface 162a is an example of the "fourth side surface" in the present invention.

The Peltier element 16a is arranged on a side (the side along arrow Z2) of the lower heat transfer portion 62a closer to the heat sink 5a, while the lower heat transfer portion 62a and a heat-absorbably constituted first side (the upper surface) of the Peltier element 16a are configured to be fixed to each other in a state in surface contact with each other. Thus, the headup display 100 is so configured that the Peltier element 16a absorbs heat transferred to the lower heat transfer portion 62a.

As shown in Fig. 4, the heat transfer member 6b is arranged between the LD plate 8b and the heat sink 5b and provided to be capable of transferring heat from the LD plate 8b to the heat sink 5b (the Peltier element 16b), similarly to the heat transfer member 6a. Further, the heat transfer member 6b includes upper and lower heat transfer portions 61b and 62b, while the upper heat transfer portion 61b is rectangularly formed as viewed from the back surface side (the side along arrow Y1) of the laser diode 11b and arranged to be in surface contact with a surface of the LD plate 8b on a side (the side along arrow Y1) opposite to the laser diode 11b, similarly to the upper heat transfer portion 61a. Thus, the headup display 100 is so configured that heat from the laser diode 11b is transferred to the LD plate 8b as well as to the upper heat transfer portion 61b.

As shown in Fig. 4, the lower heat transfer portion 62b is arranged on a side (the side along arrow Z2) of the upper heat transfer portion 61b closer to the heat sink 5b, and the upper and lower heat transfer portions 61b and 62b are integrally formed. Thus, the lower heat transfer portion 61b is configured to transfer heat received from the LD plate 8b to the lower heat transfer portion 62b. The Peltier element 16b is arranged on a side (the side along arrow Z2) of the lower heat transfer portion 62b closer to the heat sink 5a, while the lower heat transfer portion 62b and a heat-absorbably constituted first side of the Peltier element 16b are configured to be fixed to each other in a state in surface contact with each other. Thus, the headup display 100 is so configured that the Peltier element 16b absorbs heat transferred to the lower heat transfer portion 62b.

As shown in Fig. 4, the heat transfer member 6c is arranged between the LD plate 8c and the heat sink 5c, and provided to be capable of transferring heat from the LD plate 8c to the heat sink 5c. More specifically, the heat transfer member 6c includes upper and lower heat transfer portions 61c and 62c and a heat transfer connecting portion 63c, while the upper heat transfer portion 61c is rectangularly formed as viewed from the back surface side (the side along arrow X1) of the laser diode 11c, and arranged to be in surface contact with a surface of the LD plate 8c on a side (the side along arrow X1) opposite to the laser diode 11c. Thus, the headup display 100 is so configured that heat from the laser diode 11c is transferred to the LD plate 8c as well as to the upper heat transfer portion 61c.

As shown in Fig. 4, the heat transfer connecting portion 63c is arranged on a side (the side along arrows Z2 and Y1) of the upper heat transfer portion 61c closer to the heat sink 5b, while the upper heat transfer portion 61c and the heat transfer connecting portion 63c are integrally formed. The lower heat transfer portion 62c is arranged on a side (the side along arrow Z2) of the heat transfer connecting portion 63c closer to the heat sink 5b, while the heat transfer connecting portion 63c and the lower heat transfer portion 62c are integrally formed. The lower heat transfer portion 62c and the heat sink 5b are arranged in a state in surface contact with each other. Thu, the upper and lower heat transfer portions 61c and 62c and the heat transfer connecting portion 63c are configured to transfer heat received from the LD plate 8b to the heat sink 5b.

According to the first embodiment, the heat transfer member 6a is configured to be capable of transferring heat from the laser diode 11a and the LD plate 8a whose mounting positions have been aligned to the Peltier element 16b (the heat sink 5a) on any position in the range where the mounting positions of the laser diode 11a and the LD plate 8a are aligned in the direction parallel to the back surface of the laser diode 11a, as shown in Fig. 7.

More specifically, the upper heat transfer portion 61a has a height h1 (in the direction along arrow Z) and a width W1 (in the direction along arrow X) from the upper end portion of the lower heat transfer portion 62a, as shown in Fig. 7. The height h1 has a magnitude larger than the length L2 (see Fig. 5) of the laser diode 11a (and the LD plate 8a) in the position-aligned range (in the direction along arrow Z), while the width W1 has a magnitude larger than the length L1 (see Fig. 5) of the laser diode 11a (and the LD plate 8a) in the movable range (in the direction along arrow X). In other words, the height h1, the width W1 and the lengths L1 and L2 are in the following relations (2) and (3). Thus, the heat transfer member 6a is configured to come into surface contact with the LD plate 8a on any position in the range (the lengths L1 and L2) where the mounting positions of the laser diode 11a and the LD plate 8a are aligned in the direction (the direction along arrow X or Z) parallel to the back surface of the laser diode 11a. The heat transfer members 6b and 6c are configured to have magnitude relations (the relations (2) and (3)) with the LD plates 8a and 8b, similarly to the heat transfer member 6a.

$$h1 \geq L2 \ \ldots \ (2)$$

$$W1 \geq L1 \ \ldots \ (3)$$

According to the first embodiment, the heat transfer member 6a and the LD plate 8a are configured not to be fixed to each other. In other words, the heat transfer member 6a and the LD plate 8a are configured to be relatively movable.

Transfer paths of heat (heat transfer paths) in the headup display 100 according to the first embodiment are now described with reference to Fig. 6.

According to the first embodiment, the thermal resistance of a first heat transfer path from the laser diode 11a (11b or 11c) to the housing portion 7 (base portion) is larger than the thermal resistance of a second heat transfer path from the laser diode 11a (11b or 11c) to the heat sink 5a or 5b. In this specification, the term "thermal resistance" denotes a value obtained by multiplying a contact area with a heat source, the length of a heat radiation path (the distance to a next component) and heat conductivity by each other. When a plurality of components are present on the heat transfer path, the thermal resistance is described as a term denoting the sum of values obtained by performing the aforementioned multiplication on the plurality of components.

As shown in Fig. 6, the flexible printed board 18a first supplies power to the laser diode 11a, which in turn emits a laser beam and generates heat. The heat generated by the laser diode 11a is transferred to the LD plate 8a (the second heat transfer path) in contact with the laser diode 11a and the mounting base portion 71a (the first heat transfer path). The mounting base portion 71a is made of resin or the like having low heat conductivity, whereby (the thermal resistance of the first heat transfer path is relatively large, and) the heat generated by the laser diode 11a is mainly transferred to the LD plate 8a (through the second heat transfer path). In other words, the quantity of heat generated by the laser diode 11a and transferred to the housing portion 7 in contact with the mounting base portion 71a (through the first heat transfer path) is small.

Then, the heat received by the LD plate 8a is transferred to the heat sink 5a through the heat transfer member 6a and the Peltier element 16a in surface contact with each other (through the second heat transfer path). Then, the heat generated by the laser diode 11a and transferred to the heat sink 5a is radiated from the light source device 1 through the fins (see Fig. 3). The LD plate 8a, the heat transfer member 6a and the heat sink 5a arranged on the second heat transfer path are made of the material such as metal higher in heat conductivity than the resin (the material for the mounting base portion 71 and the housing portion 7) as hereinabove described, and the thermal resistance of the first heat transfer path is larger than the thermal resistance of the second heat transfer path also in consideration of the lengths of the heat transfer paths.

The flexible printed board 18a supplies power to the laser diode 11b, which in turn emits a laser beam and generates heat similarly to the laser diode 11a. The heat generated by the laser diode 11b is mainly transferred to the LD plate 8b. Then, the heat received by the LD plate 8b is transferred to the heat sink 5b through the heat transfer member 6b and the Peltier element 16b (through the second heat transfer path). The heat generated by the laser diode 11b and transferred to the heat sink 5b is radiated from the light source device 1 through the fins (see Fig. 3).

The flexible printed board 18c supplies power to the laser diode 11c, which in turn emits a laser beam and generates heat. The heat generated by the laser diode 11c is mainly transferred to the LD plate 8c. Then, the heat received by the LD plate 8c is transferred to the heat sink 5b through the heat transfer member 6c (through the second heat transfer path). The heat generated by the laser diode 11c and transferred to the heat sink 5 is radiated from the light source device 1 through the fins (see Fig. 3).

According to the first embodiment, the following effects can be attained:

According to the first embodiment, as hereinabove described, the LD plates 8a to 8c are arranged on the back surface sides of the respective ones of the laser diodes 11a to 11c, while the heat transfer members 6a to 6c are arranged between the LD plates 8a to 8c and the heat sinks 5a and 5b respectively. Thus, the mounting position of the laser diode 11a with respect to the housing portion 7 can be aligned and the heat generated by the laser diode 11a can be transferred to the heat sink 5a through the LD plate 8a and the heat transfer member 6a in the case where the heat transfer member 6a is arranged after the mounting positions of the laser diode 11a and the LD plate 8a are aligned with respect to the housing portion 7 when the laser diode 11a is mounted on the housing portion 7.

According to the first embodiment, as hereinabove described, the heat sinks 5a and 5b are arranged to be separated from the housing portion 7 (arranged on positions exposed with respect to the housing portion 7), the LD plates 8a to 8c are provided to be capable of transferring heat from the back surfaces of the laser diodes 11a to 11c to the sides of the heat sinks 5a and 5b respectively, and the heat transfer members 6a to 6c are provided to be capable of transferring heat from the LD plates 8a to 8c to the heat sinks 5a and 5b respectively. Thus, the heat generated by the laser diodes 11a to 11c can be radiated from the heat sinks 5a and 5b having high heat radiation properties, dissimilarly to a case of transferring heat from the laser diodes 11a to 11c to the housing portion 7. Consequently, the mounting positions of the laser diodes 11a to 11c with respect to the housing portion 7 can be aligned, and temperature control of the laser diodes 11a to 11c can be prevented from becoming difficult when the laser diodes 11a to 11c are mounted on the housing portion 7.

According to the first embodiment, as hereinabove described, the laser diodes 11a to 11c are so configured that the mounting positions thereof are aligned in the directions perpendicular to the optical axes of the laser diodes 11a to 11c (directions parallel to the back surfaces of the laser diodes 11a to 11c) when the laser diodes 11a to 11c are mounted on the housing portion 7, while the LD plates 8a to 8c or the heat transfer members 6a to 6c are configured to be capable of transferring heat generated by the position-aligned laser diodes 11a to 11c to the sides of the heat sinks 5a and 5b on any positions in the range where the mounting positions of the laser diodes 11a to 11c are aligned in the directions parallel to the back surfaces of the laser diodes 11a to 11c. Thus, heat generated by the laser diodes 11a to 11c can be transferred to the heat sinks 5a and 5b regardless of the mounting positions of the laser diodes 11a to 11c, whereby temperature control of the respective ones of the laser diodes 11a to 11c can be reliably prevented from becoming difficult.

According to the first embodiment, as hereinabove described, the laser diodes 11a to 11c and the LD plates 8a to 8c are provided to be fixed to each other in heat-transferable states respectively. Further, the LD plates 8a to 8c and the heat transfer members 6a to 6c are configured to be capable of transferring heat in states relatively movable in the directions perpendicular to the optical axes of the laser diodes 11a to 11c (in the directions along the back surfaces of the laser diodes 11a to 11c) respectively. In addition, the heat transfer members 6a to 6c are configured to be capable of transferring heat from the laser diodes 11a to 11c and the LD plates 8a to 8c whose mounting positions have been aligned to the heat sinks 5a and 5b on any positions in the range where the mounting positions of the laser diodes 11a to 11c and the LD plates 8a to 8c are aligned in the directions perpendicular to the optical axes of the laser diodes 11a to 11c (in the directions parallel to the back surfaces of the laser diodes 11a to 11c). Thus, the LD plates 8a to 8c and the heat transfer members 6a to 6c can transfer heat in the states relatively movable in the directions along the back surfaces of the laser diodes 11a to 11c, whereby heat generated by the laser diodes 11a to 11c can be transferred to the heat sinks 5a and 5b regardless of the mounting positions of the laser diodes 11a to 11c and the LD plates 8a to 8c. Consequently, temperature control of the laser diodes 11a to 11c can be more reliably prevented from becoming difficult.

According to the first embodiment, as hereinabove described, the LD plates 8a to 8c (surfaces 82) and the heat transfer members 6a to 6c (side surfaces 161a) are arranged in surface contact states in the directions along the back surfaces of the laser diodes 11a to 11c. Thus, the LD plates 8a to 8c and the heat transfer members 6a to 6c can be easily configured to be relatively movable, while the contact areas are enlarged as compared with a case where the LD plates 8a to 8c and the heat transfer members 6a to 6c are in point or line contact with each other, whereby heat generated by the laser diodes 11a to 11c can be efficiently transferred. Further, the LD plate 8a and the heat transfer member 6a can be relatively moved while maintaining the state where the surface 82 and the side surface 161a are in contact with each other.

According to the first embodiment, as hereinabove described, the laser diodes 11a to 11c include the electrodes 19 provided to project from the laser diodes 11a to 11c to the back surface sides thereof, and the length L4 of the LD plates 8a to 8c is larger than the length L3 of the electrodes in the directions parallel to the extensional directions of the electrodes 19. Thus, the electrodes 19 can be prevented from projecting beyond the LD plates 8a to 8c, whereby no structures corresponding to the projecting electrodes 19 (electrodes relieving electrodes) may be provided on the heat transfer members 6a to 6c when the heat transfer members 6a to 6c are provided in the extensional directions of the electrodes 19. Therefore, the contact areas of the LD plates 8a to 8c and the heat transfer members 6a to 6c can be prevented from reduction resulting from provision of structures for relieving the electrodes on the heat transfer members 6a to 6c.

According to the first embodiment, as hereinabove described, the laser diodes 11a to 11c include the electrodes 19 provided to project from the laser diodes 11a to 11c toward the back surface sides thereof. The light source device 1 further includes the flexible printed boards 18a to 18c capable of supplying power to the laser diodes 11a to 11c. Further, the LD plates 8a to 8c are provided with the openings 81 on the sides opposite to the heat sinks 5a and 5b, and the flexible printed boards 18a to 18c are connected to the electrodes 19 through the openings 81 of the LD plates 8a to 8c and configured to supply power to the laser diodes 11a to 11c. Thus, the flexible printed boards 18a to 18c can easily supply power to the laser diodes 11a to 11c, and the quantities of heat transferred by the LD plates 8a to 8c can be prevented from reduction resulting from provision of the openings 81, dissimilarly to a case of providing the openings 81 on the sides of the LD plates 8a to 8c closer to the heat sinks 5a and 5b.

According to the first embodiment, as hereinabove described, the housing portion 7 is so configured that the plurality of laser diodes 11a to 11c can be mounted thereon, while the LD plates 8a to 8c are arranged on the back surface sides of the laser diodes 11a to 11c to be capable of transferring heat from the back surfaces of the laser diodes 11a to 11c to the sides of the heat sinks 5a and 5b. When the housing portion 7 is provided with a plurality of laser diodes (the laser diodes 11a to 11c) in general, the laser diodes may thermally interfere with each other through the housing portion 7. In this point, the headup display 100 according to the first embodiment is so configured that heat generated by the laser diodes 11a to 11c can be transferred to the heat sinks 5a and 5b set to be separated from the housing portion 7 as hereinabove described, whereby the LD plates 8a to 8c and the heat transfer members 6a to 6c transfer heat generated by the laser diodes 11a to 11c to the heat sinks 5a and 5b set to be separated from the housing 7. Consequently, the laser diodes 11a to 11c can be prevented from thermally interfering with each other through the housing portion 7, dissimilarly to a case where heat generated by the laser diodes 11a to 11c are transferred to the same housing portion 7. Further, temperature control (heat radiation or the like) of the respective ones of the laser diodes 11a to 11c can be prevented from becoming difficult.

According to the first embodiment, as hereinabove described, the LD plates 8a to 8c are arranged to be in contact with the laser diodes 11a to 11c respectively, while the heat transfer members 6a to 6c are arranged to be in contact with the LD plates 8a to 8c and the heat sinks 5a and 5b respectively. Thus, the mounting positions of the laser diodes 11a to 11c with respect to the housing portion 7 can be aligned and heat generated by the laser diodes 11a to 11c can be transferred to the heat sinks 5a and 5b through the LD plates 8a to 8c and the heat transfer members 6a to 6c in the case where the heat transfer members 6a to 6c are arranged after the mounting positions of the laser diodes 11a to 11c and the LD plates 8a to 8c are aligned with respect to the housing portion 7 when the laser diodes 11a to 11c are mounted on the housing portion 7, for example.

According to the first embodiment, as hereinabove described, the heat sinks 5a and 5b are arranged to be separated from the housing portion 7 (arranged on the positions exposed with respect to the housing portion 7), the LD plates 8a to 8c are arranged to come into contact with the laser diodes 11a to 11c respectively, and the heat transfer members 6a to 6c are arranged to come into contact with the LD plates 8a to 8c and the heat sinks 5a to 5b. Thus, heat generated by the laser diodes 11a to 11c is transferred to the heat sinks 5a and 5b arranged to be separated from the housing portion 7 (arranged on the positions exposed with respect to the housing portion 7), whereby the laser diodes 11a to 11c can be prevented from thermally interfering with each other through the housing portion 7, dissimilarly to a case where heat generated by the laser diodes 11a to 11c is transferred to the same housing portion 7. Consequently, temperature control of the laser diodes 11a to 11c can be prevented from becoming difficult. Thus, the mounting positions of the laser diodes 11a to 11c with respect to the housing portion 7 can be aligned when the laser diodes 11a to 11c are mounted on the housing portion 7, while temperature control of the laser diodes 11a to 11c can be prevented from becoming difficult.

According to the first embodiment, as hereinabove described, the headup display 100 is so configured that the thermal resistance of the first heat transfer path from the laser diode 11a (11b or 11c) to the housing portion 7 (base portion) is larger than the thermal resistance of the second heat transfer path from the laser diode 11a (11b or 11c) to the heat sink 5a or 5b (the LD plates 8a to 8c or the heat transfer members 6a to 6c) so that the quantity of heat transferred from the laser diode 11a (11b or 11c) to the housing portion 7 is smaller than the quantity of heat transferred from the laser diode 11a (11b or 11c) to the heat sink 5a or 5b, whereby the laser diodes 11a to 11c can be prevented from thermally interfering with each other through the housing portion 7. Thus, temperature control of the laser diodes 11a to 11c can be further prevented from becoming difficult.

According to the first embodiment, as hereinabove described, the headup display 100 is provided with the LD plate 8a arranged in contact with the laser diode 11a and the heat transfer member 6a arranged in contact with the LD plate 8 and the heat sink 5a, and the housing portion 7 is so configured that the laser diode 11a is position-aligned and mounted thereon. The LD plate 8a includes the outer side surface 83, the heat transfer member 6a includes the side surface 16a, and the clearance 63a is provided between the outer surface 83 and the side surface 162a. Thus, the mounting positions of the laser diode 11a and the LD plate 8a can be moved without moving the arrangement position of the heat transfer member 6a, due to the clearance 63a provided between the outer surface 83 and the side surface 162a. Consequently, the mounting position of the laser diode 11a with respect to the housing portion 7 can be aligned when the laser diode 11a is mounted on the housing portion 7, while temperature control of the laser diode 11a can be prevented from becoming difficult.

According to the first embodiment, as hereinabove described, the Peltier elements 16a and 16b are provided between the heat transfer member 6a (the heat transfer members 6a and 6c) and the heat sink 5a (as well as the heat sink 5b). Thus, the Peltier elements 16a and 16b can cool the laser diodes 11a to 11c, even if the temperature outside the light source device 1 is relatively high. Thus, temperature control of the laser diodes 11a to 11c can be prevented from becoming difficult also when the temperature outside the light source device 1 is relatively high.

(Second Embodiment)

The structure of a headup display 101 according to a second embodiment of the present invention is now described with reference to Figs. 1, 8 and 9. According to the second embodiment, a heat transfer member is arranged to be fixed to a housing portion (base portion), dissimilarly to the headup display 100 according to the first embodiment in which the heat transfer members 6a to 6c are arranged to be fixed to the case body portion 4a.

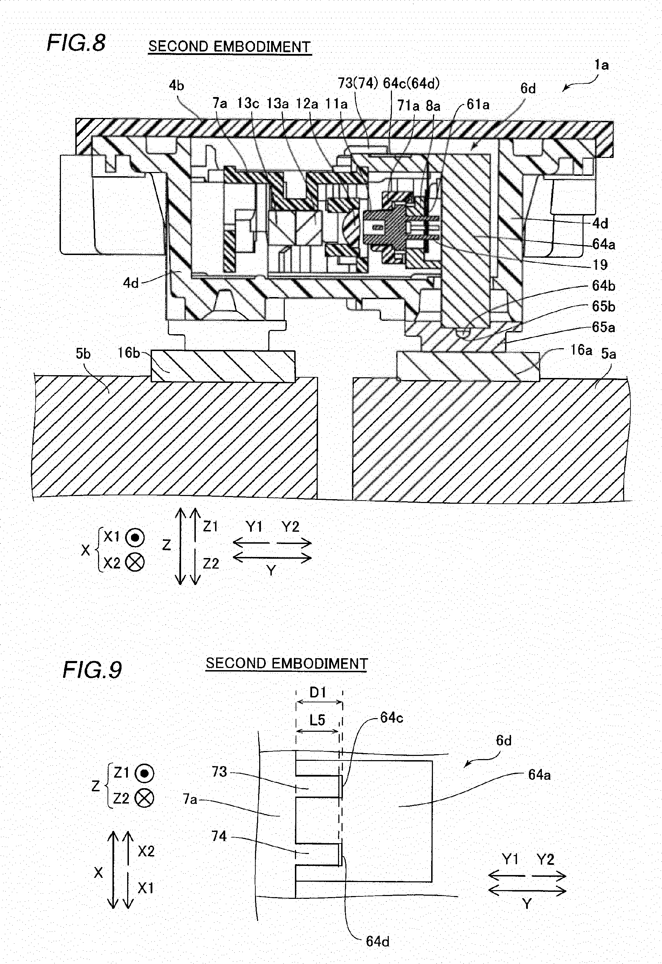

As shown in Fig. 1, the headup display 101 according to the second embodiment includes a light source device 1a. As shown in Fig. 8, the light source device 1a includes a case body portion 4d, a housing portion 7a (base portion) and a heat transfer member 6d, which includes first and second heat transfer members 64a and 65a. The headup display 101 is an example of the "projector" in the present invention. The heat transfer member 6d is an example of the "second heat transfer portion" or "heat transfer portion" in the present invention.

As shown in Fig. 8, the first heat transfer member 64a is made of a metallic material, and arranged to be in surface contact with a surface of an LD plate 8a on a back surface side (the side along arrow Y2) in a direction (along arrow X or Z) along the back surface of a laser diode 11a. The second heat transfer member 65a is arranged on a side (the side along arrow Z2) of the first heat transfer member 64a closer to a heat sink 5a. Engaging portions 64b and 65b are provided on sides of the first and second heat transfer members 64a and 65a closer to the heat sink 5a respectively, and the headup display 101 is so configured that the engaging portions 64b and 65b engage with each other thereby fixing the first and second heat transfer members 64a and 65a to each other. A Peltier element 16a is arranged on the side (the side along arrow Z2) of the second heat transfer member 65a closer to the heat sink 5a, and the side (the side along arrow Z2) of the second heat transfer member 65a closer to the heat sink 5a and the Peltier element 16a are configured to be in surface contact with each other.

According to the second embodiment, the first heat transfer member 64a is arranged to partially cover the upper surface side (the side along arrow Z1) of the housing portion 7a, which is provided with engaging portions 73 and 74 configured to be engageable with the first heat transfer member 64a including engaging portions 64c and 64d configured to be engageable with the engaging portions 73 and 74 provided on the housing portion 7a, as shown in Figs. 8 and 9. The engaging portions 73, 74, 64c and 64d are configured to engage with each other to be capable of being position-aligned in a direction (along arrow Y) perpendicular to the back surface of the laser diode 11a.

More specifically, the housing portion 7a is provided with the engaging portions 73 and 74 having convex shapes of a length L5, as shown in Fig. 9. The engaging portions 64c and 64d having concave shapes of a depth D1 are provided on portions (the side along arrows Z1 and Y1) of the first heat transfer member 64a covering the housing portion 7a respectively. The headup display 101 is so configured that the convex engaging portions 73 and 74 and the concave engaging portions 64c and 64d engage with each other thereby fixing the housing portion 7a and the first heat transfer member 64a to each other. The depth D1 is larger in magnitude than the length L5. In other words, the depth D1 and the length L5 are in the following relation (4):

$$D1 > L5 \dots (4)$$

Thus, the laser diode 11a is configured to be capable of being position-aligned in a direction (along arrow Y) perpendicular to the back surface thereof also when the position (in the direction along arrow Y) where the first heat transfer member 64a and the LD plate 8a are in surface contact with each other is dispersed, since the depth D1 of the engaging portions 64c and 64d is larger than the length L5 of the engaging portions 73 and 74. The remaining structures of the headup display 101 according to the second embodiment are similar to those of the headup display 100 according to the first embodiment.

According to the second embodiment, the following effect can be attained:

According to the second embodiment, as hereinabove described, the housing portion 7a is provided with the engaging portions 73 and 74 configured to be engageable with the first heat transfer member 64a, which in turn includes the engaging portions 64c and 64d configured to be engageable with the engaging portions 73 and 74 provided on the housing portion 7a, and the engaging portions 73, 74, 64c and 64d are configured to engage with each other to be capable of being position-aligned in the direction perpendicular to the back surface of the laser diode 11a. Further, the depth D1 of the engaging portions 64c and 64d is larger than the length L5 of the engaging portions 73 and 74. Thus, the housing portion 7a and the first heat transfer member 64a can be fixed to each other also when the arrangement position of the laser diode 11a or the LD plate 8a provided between the housing portion 7a and the first heat transfer member 64a is dispersed. The remaining effects of the headup display 101 according to the second embodiment are similar to those of the headup display 100 according to the first embodiment.

(Third Embodiment)

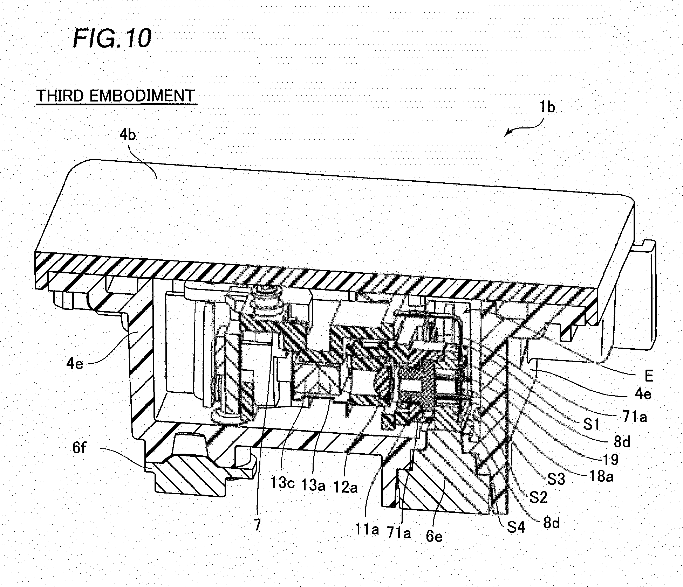

The structure of a headup display 102 according to a third embodiment of the present invention is now described with reference to Figs. 1 and 10. According to the third embodiment, surfaces of an LD plate and a heat transfer member are at least partially covered with a heat shielding material.

As shown in Fig. 1, the headup display 102 according to the third embodiment includes a light source device 1b. According to the third embodiment, the light source device 1b includes a case body portion 4e, an LD plate 8d and a heat transfer member 6e, as shown in Fig. 10. The back surface of a laser diode 11a and a surface of the LD plate 8d on a side (the side along arrow Y1) closer to the laser diode 11a are arranged to be in surface contact with each other in a direction (along arrow X or Z) along the back surface of the laser diode 11a. The LD plate 8d and the laser diode 11a are configured to be relatively movable in the direction (along arrow X or Z) along the back surface of the laser diode 11a. Thus, the headup display 102 is so configured that heat generated by the laser diode 11a can be transferred to the LD plate 8d on any position in a range where the mounting position of the laser diode 11a is aligned with respect to the housing portion 7 (base portion). The headup display 102 is an example of the "projector" in the present invention. The heat transfer member 6e is an example of the "second heat transfer portion" or the "heat transfer portion" in the present invention. The LD plate 8d is an example of the "first heat transfer portion" or the "heat transfer portion" in the present invention.

As shown in Fig. 10, the heat transfer member 6e fixed to the case body portion 4e is arranged on a side (the along arrow Z2) of the LD plate 8d closer to a heat sink 5a, while the lower end surface of the LD plate 8d and the upper end surface of the heat transfer member 6e are arranged to be in surface contact with each other. The heat transfer member 6e and a Peltier element 16a are arranged to be in surface contact with each other, and the heat transfer member 6e is configured to transfer heat from the laser diode 11a to the heat sink 5a through the Peltier element 16a, similarly to that of the headup display 100 according to the first embodiment.

According to the third embodiment, surfaces (S1, S2 and S3) of the LD plate 8d excluding the boundary surface between the same and the laser diode 11a and a surface (S4) of the heat transfer member 6e excluding the boundary surface between the same and the LD plate 8d are covered by insulation coating. More specifically, insulation coating with heat conductivity of at least 0.1 W/m·K and less than 0.22 W/m·K is applied to the upper surface (S1), the back surface (S2) and a side end surface (S3) of the LD plate 8d and the overall side surface (S4) of the heat transfer member 6e.

The heat conductivity of the insulation coating is smaller than the heat conductivity (about 100 W/m·K) of an aluminum alloy. Thus, the quantity of heat transferred from an inner portion E of the case body portion 4e to the LD plate 8d or the heat transfer member 6e can be reduced when the temperature of the inner portion E of the case body portion 4e is higher than that of the LD plate 8d or the heat transfer member 6e. In this case, a main CPU 21 and the Peltier element 16a control the laser diode 11a to keep a temperature of at least 5°C and not more than 10°C as hereinabove described, whereby necessity of increasing cooling performance of the Peltier element 16a is suppressed also when the temperature of the inner portion E of the case body 4e exceeds 10°C. The remaining structures of the headup display 102 according to the third embodiment are similar to those of the headup display 100 according to the first embodiment.

According to the third embodiment, the following effect can be attained:

According to the third embodiment, as hereinabove described, the headup display 102 is provided with the LD plate 8d arranged in contact with the laser diode 11a, the heat transfer member 6e arranged in contact with the LD plate 8d and the Peltier element 16a, while the surfaces (S1, S2 and S3) of the LD plate 8d excluding the boundary surface between the same and the laser diode 11a and the surface (S4) of the heat transfer member 6e excluding the boundary surface between the same and the LD plate 8d are covered by the insulation coating. When the temperature of the LD plate 8d or the heat transfer member 6e is lower than that of the outside of the laser diode 11a (the inner portion E of the case body portion 4e) due to the Peltier element 16a, the LD plate 8d and the heat transfer member 6e absorb excess heat from the outside of the laser diode 11a (the inner portion E of the case body portion 4e), and hence the Peltier element 16a must be increased in size. In this point, the headup display 102 according to the third embodiment includes the Peltier element 16a while the surfaces (S1, S2 and S3) of the LD plate 8d excluding the boundary surface between the same and the laser diode 11a and the surface (S4) of the heat transfer member 6e excluding the boundary surface between the same and the LD plate 8d are covered by the insulation coating so that the LD plate 8d and the heat transfer member 6e can absorb excess heat from the outside of the laser diode 11a (the inner portion E of the case body portion 4e), whereby size increase of the Peltier element 16a can be prevented. The remaining effects of the headup display 102 according to the third embodiment are similar to those of the headup display 100 according to the first embodiment.

(Fourth Embodiment)

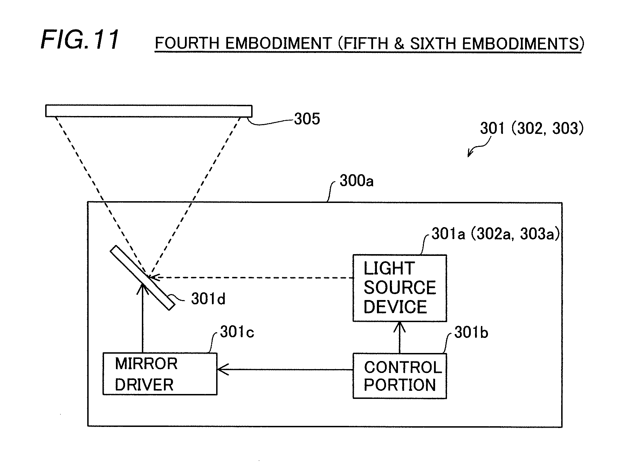

The structure of a headup display 301 according to a fourth embodiment of the present invention is now described with reference to Figs. 11 to 17. According to the fourth embodiment, heat transfer members include recess portions in which LD plates are at least partially arranged, and the headup display 301 is provided with grease members, filling up clearances between the LD plates and the recess portions, made of a material deformable in response to the clearances.

As shown in Fig. 11, the headup display 301 according to the fourth embodiment includes a light source device 301a, a control portion 301b, a mirror driver 301c, a scanning mirror 301d and a headup display housing portion 300a. The mirror driver 301c is configured to drive the scanning mirror 301d constituted of an MEMS mirror or the like on the basis of a command from the control portion 301b including a CPU or the like. The scanning mirror 301d is configured to project an image on a windshield 305 of an automobile (not shown) by reflecting and scanning laser beams received from the light source device 301a. The light source device 301a is configured to emit the laser beams on the basis of a command from the control portion 301b. The headup display 301 is an example of the "projector" in the present invention. The mirror driver 301c and the scanning mirror 301d are examples of the "optical scanning portion" in the present invention.

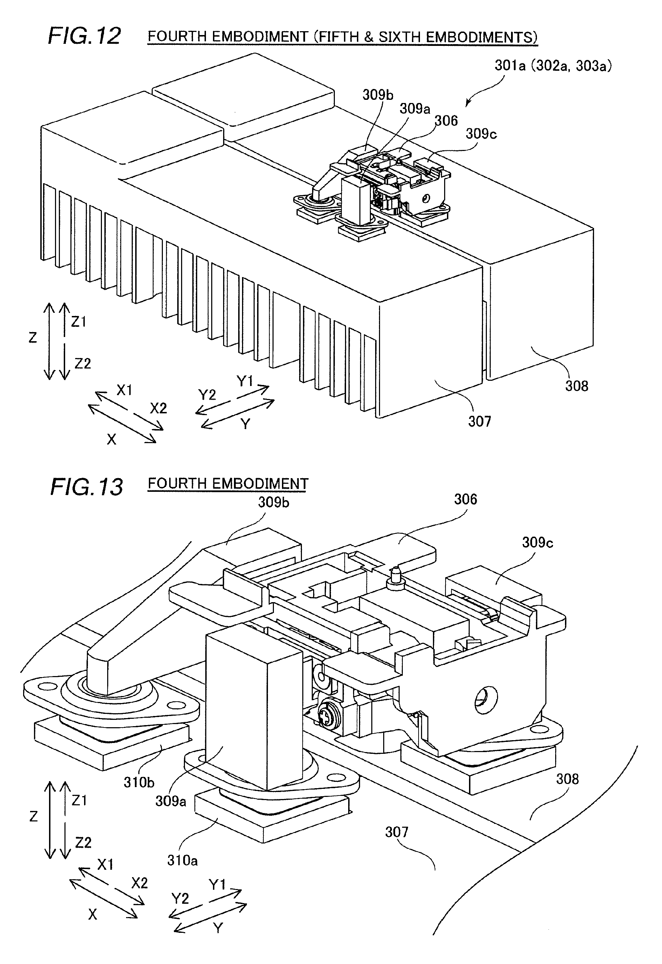

According to the fourth embodiment, the light source device 301a includes a housing portion 306 (base portion) made of resin or the like, heat sinks 307 and 308 made of metal such as aluminum, heat transfer members 309a to 309c made of metal and Peltier elements 310a and 310b, as shown in Figs. 12 and 13. The heat sinks 307 and 308 are arranged to be parallel to each other in plan view, as shown in Fig. 12. The heat transfer members 309a to 309c are examples of the "second heat transfer portion", the "third heat transfer portion" or the "heat transfer portion" in the present invention. The heat sinks 307 and 308 are examples of the "heat radiation portion" in the present invention. The Peltier elements 310a and 310b are examples of the "element having a cooling function" or the "heat radiation portion" in the present invention.

According to the fourth embodiment, the Peltier elements 310a and 310b are arranged on the upper surface (the surface in the direction along arrow Z1 in Fig. 13) of the heat sink 307, as shown in Fig. 13. The Peltier elements 310a and 310b are configured to be externally supplied with power thereby reducing the temperatures of (absorbing heat from) first surface sides (the sides along arrow Z1 in Fig. 13) and making second surface sides (the sides along arrow Z2 in Fig. 13) generate heat (radiate heat absorbed on the first surface sides). In other words, the Peltier elements 310a and 310b have cooling functions with respect to the first surface sides. Further, the Peltier elements 310a and 310b are so configured that quantities of heat absorption are controllable in response to the magnitude of the externally supplied power.

According to the fourth embodiment, the heat transfer member 309c is arranged on the upper surface (the surface along arrow Z1 in Fig. 13) of the heat sink 308, to be directly in contact with the heat sink 308, as shown in Fig. 13.

As shown in Fig. 12, the heat sink 307 arranged is provided in the form of a planar surface on a first side (the side along arrow Z1 in Fig. 12) where the Peltier elements 310a and 310b are arranged, and provided with fins on a second side (the side along arrow Z2 in Fig. 12) where no Peltier elements 310a and 310b are arranged. The heat sink 307 is configured to be capable of radiating heat transferred from the Peltier elements 310a and 310b in a direction (along arrow Z2 in Fig. 12) different from the side where the housing portion 306 and the like are arranged through the fins. The heat sink 308 also has fins on a side (along arrow Z2 in Fig. 12) different from a side (along arrow Z1 in Fig. 12) where the heat transfer member 309c is arranged, and is configured to be capable of radiating heat in the direction (along arrow Z2 in Fig. 12) different from the side where the housing portion 306 and the like are arranged, similarly to the heat sink 306. As shown in Fig. 12, the heat sinks 307 and 308 are arranged at a prescribed interval, so that no heat is transferred therebetween.

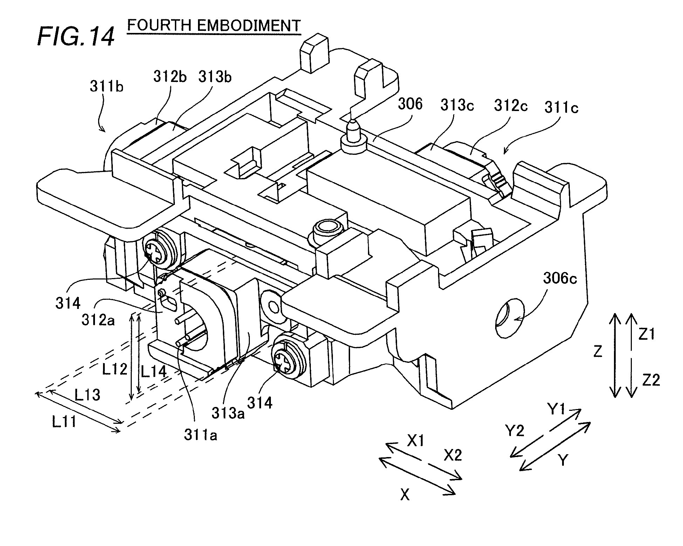

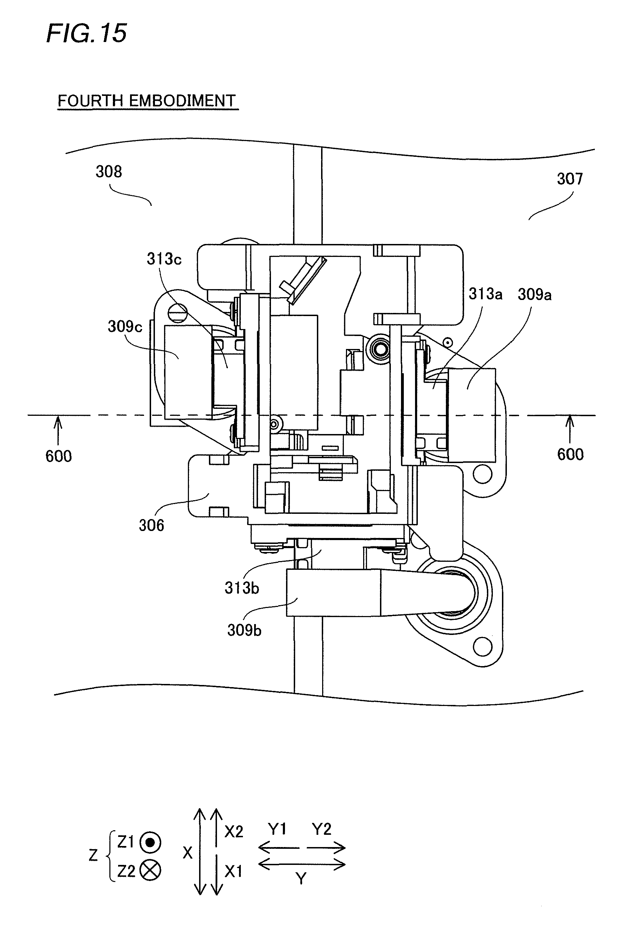

As shown in Figs. 14 and 15, laser diodes 311a to 311c are mounted on side surfaces of the housing portion 306. More specifically, the laser diode 311a emitting a red laser beam is mounted on a first side surface (the side surface along arrow Y2 in Figs. 14 and 15) of the housing portion 306, to emit the laser beam into the housing portion 306. The laser diode 311c emitting a green laser beam is mounted on a second side surface (the side surface along arrow Y1 in Figs. 14 and 15) of the housing portion 306, to emit the laser beam into the housing portion 306. The laser diode 311b emitting a blue laser beam is mounted on the rear side surface (the side surface along arrow X1 in Figs. 14 and 15) of the housing portion 306, to emit the laser beam into the housing portion 306. The laser diodes 311a to 311c are examples of the "light source portions" in the present invention.

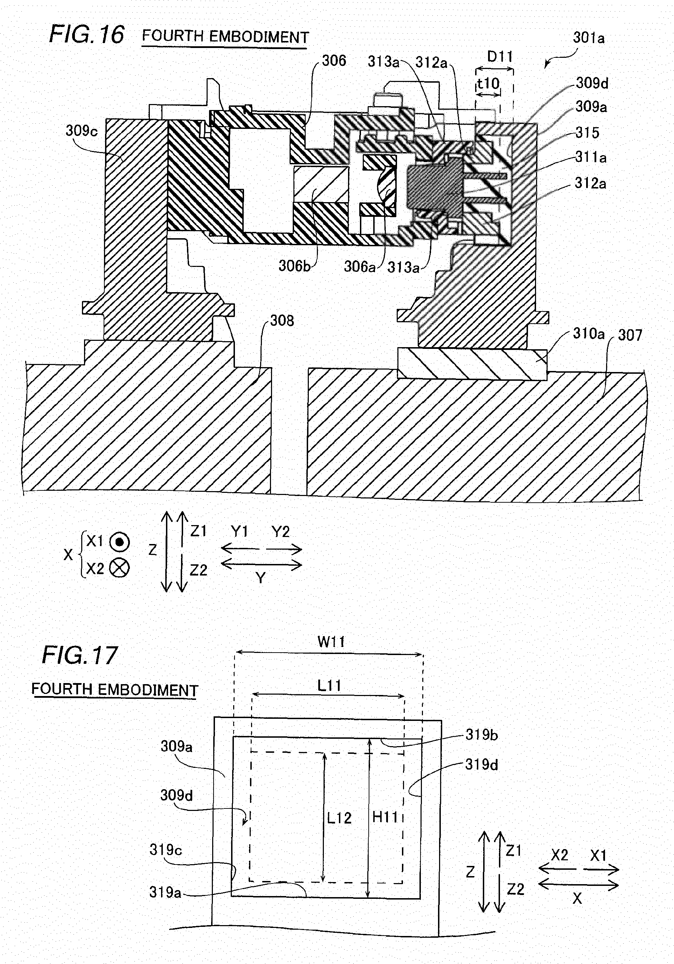

As shown in Figs. 14 to 16, the housing portion 306 includes optical components (a lens 306a and a mirror 306b (see Fig. 16), for example) therein, and is configured to coaxially superpose the laser beams emitted by the laser diodes 311a to 311c through the optical components. The housing portion 306 is provided with an opening 306c on the front side surface (the side surface along arrow X2 in Figs. 14 and 15) thereof, and configured to emit the coaxially superposed laser beams emitted from the laser diodes 311a to 311c from the opening 306c. The headup display 301 is so configured that the output laser beams are projected on the windshield 305 through the aforementioned scanning mirror 301d. The housing portion 306 is fixed to the headup display housing portion 300a.

According to the fourth embodiment, an LD plate 312a made of metal or the like is provided on the rear surface side (the side along arrow Y2 in Fig. 14) of the laser diode 311a to be in surface contact with the laser diode 311a, as shown in Fig. 14. A mounting base portion 313a made of resin or the like for fixing the laser diode 311a is provided between the LD plate 312a and the housing portion 306. Metal is higher in heat conductivity than resin in general, and hence heat generated by the laser diode 311a is transferred to the LD plate 312a in a larger quantity than the mounting base portion 313a. Similarly, LD plates 312b and 312c are arranged on the rear surface sides of the laser diodes 311b and 311c, which are provided with mounting base portions 313b and 313c. The LD plates 312a to 312c are examples of the "first heat transfer portion" or the "heat transfer portion" in the present invention.

According to the fourth embodiment, the laser diodes 311a to 311c are configured to be movable so that mounting positions thereof are aligned when the laser diodes 311a to 311c are mounted on the housing portion 306, as shown in Fig. 14. More specifically, the laser diode 311a is position-aligned with respect to the LD plate 312a and the mounting base portion 313a. After the laser diode 311a and the LD plate 312a are fixed to the mounting base portion 313a, the laser diode 311a, the LD plate 312a and the mounting base portion 313a fixed to each other are position-aligned with respect to the housing portion 306 and fixed thereto with screws 314. The laser beams emitted from the laser diodes 311a to 311c to be output from the opening 306c of the housing portion 306 are coaxially superposed with each other due to the aforementioned position alignment. The laser diodes 311a to 311c are movable in the range of lengths L11 and L12 in directions along arrows X and Z for the aforementioned position alignment, as shown in Fig. 14.

According to the fourth embodiment, the heat transfer member 309a has a recess portion 309d in which the laser diode 311a and the LD plate 312a are arrangeable, as shown in Fig. 16. The light source device 301a includes a heat-conductive grease member 315, which is so provided as to fill up a clearance between the laser diode 311a and the LD plate 312a and the recess portion 309d of the heat transfer member 309a. The grease member 315 is configured to receive heat generated by the laser diode 311a from the laser diode 311a and the LD plate 312a and to transfer the heat to the heat transfer member 309a. The heat transfer members 309b and 309b also have recess portions (not shown) and grease members 315 so provided as to fill up clearances between the laser diode 311b and the LD plate 312b and the recess portion of the heat transfer member 309b and between the laser diode 311c and the LD plate 312c and the recess portion of the heat transfer member 309c respectively. The grease members 315 are configured to transfer heat generated by the laser diodes 311b and 311c to the heat transfer members 309b and 309c respectively. The grease members 315 are examples of the "second heat transfer portion", the "fourth heat transfer portion" or the "heat transfer portion" in the present invention.

According to the fourth embodiment, the width W11 and the height H11 of the recess portion 309d of the heat transfer member 309a in the directions (along arrows X and Z in Fig. 17) of movement of the laser diode 311a (and the LD plate 312a) are in excess of the movable range (the aforementioned lengths L11 and L12) of the laser diode 311a (and the LD plate 312a), as shown in Fig. 17. The recess portion 309d includes opposed inner side surfaces 319a and 319b (opposed to each other in the direction along arrow Z) and opposed inner side surfaces 319c and 319d (opposed to each other in the direction along arrow X) in the direction (along arrow X or Z) where the mounting position of the laser diode 311a is aligned. The width W11 (in the direction along arrow X in Fig. 17) and the height H11 (in the direction along arrow Z in Fig. 17) of the space between the opposed inner side surfaces 319a, 319b, 319c, 319d of the recess portion 309d are larger than the lengths L13 and L14 (see Fig. 14) of a portion of the LD plate 312a arranged in the recess portion 309d. The lengths L11 to L14 are in the following relations:

$$L13 < L11$$

$$L14 < L12$$

More specifically, the recess portion 309d of the heat transfer member 309a is rectangularly formed as viewed from the front side, and has the width W11 (in the direction along arrow X in Fig. 17), the height H11 (in the direction along arrow Z in Fig. 17) and a depth D11 (see Fig. 16), as shown in Fig. 17. The LD plate 312a has a thickness t10 (see Fig. 16). The width W11, the height H11, the depth D11 and the like are in the following relations (5) to (7). The heat transfer members 309b and 309c also have shapes similar to that of the heat transfer member 309a, and are provided with recess portions having the width W11, the height H11 and the depth D11.

$$W11 \geq L11 \ ... \ (5)$$

$$H11 \geq L12 \ ... \ (6)$$

$$D11 \geq t10 \ ... \ (7)$$

Transfer paths of heat (heat transfer paths) in the headup display 301 according to the fourth embodiment are now described with reference to Figs. 13 and 16. Also according to the fourth embodiment, the thermal resistance of a first heat transfer path is larger than that of a second heat transfer path.

First, the laser diode 311a is supplied with power, thereby emitting a laser beam and generating heat, as shown in Fig. 16. Then, the heat generated by the laser diode 311a is transferred to the LD plate 312a in contact with the laser diode 311a, the mounting base portion 313a and the grease member 315 (through the first heat transfer path). The mounting base portion 313a is made of resin or the like having low heat conductivity, and hence the heat generated by the laser diode 311a is mainly transferred to the LD plate 312a and the grease member 315. In other words, the quantity of heat generated by the laser diode 311a and transferred to the housing portion 306 in contact with the mounting base portion 313a (through the first heat transfer path) is small.

As shown in Fig. 16, the heat received by the LD plate 312a is transferred to the grease member 315 in contact therewith. The heat received by the grease member 315 is transferred to the heat transfer member 309a. The heat received by the heat transfer member 309a is transferred to the Peltier element 310a. The heat received by the Peltier element 310a is transferred to the heat sink 307. Then, the heat generated by the laser diode 311a and transferred to the heat sink 307 is radiated from the light source device 301a through the fins (see Fig. 12).

The laser diode 311b is supplied with power thereby emitting a laser beam and generating heat, similarly to the laser diode 311a. The heat generated by the laser diode 311b is mainly transferred to the LD plate 312a and the grease member 315. In other words, the quantity of heat generated by the laser diode 311b and transferred to the housing portion 306 is small.

The heat received by the LD plate 312b is transferred to the grease member 315 in contact therewith. The heat received by the grease member 315 is transferred to the heat transfer member 309b. The heat received by the heat transfer member 309b is transferred to the Peltier element 310b. The heat received by the Peltier element 310b is transferred to the heat sink 307. In other words, the heat generated by the laser diodes 311a and 311b is transferred to the heat sink 307 in common. Then, the heat generated by the laser diode 311b and transferred to the heat sink 307 is radiated from the light source device 301a through the fins (see Fig. 12).

The laser diode 311c is supplied with power, thereby emitting a laser beam and generating heat. The heat generated by the laser diode 311c is mainly transferred to the LD plate 312c and the grease member 315. In other words, the quantity of heat generated by the laser diode 311c and transferred to the housing portion 306 is small.

Then, the heat received by the LD plate 312c is transferred to the grease member 315 in contact therewith. The heat received by the grease member 315 is transferred to the heat transfer member 309c. The heat received by the heat transfer member 309c is transferred to the heat sink 308 arranged directly in contact with the heat transfer member 309c. Then, the heat generated by the laser diode 311c and transferred to the heat sink 308 is radiated from the light source device 301a through the fins (see Fig. 12).

According to the fourth embodiment, the following effects can be attained:

According to the fourth embodiment, as hereinabove described, the LD plates 312a to 312c and the grease members 315 are provided between the laser diodes 311a to 311c and the housing portion 306 respectively to be in contact with the laser diodes 311a to 311c so that heat generated by the laser diodes 311a to 311c can be transferred to the heat sinks 307 and 308 arranged to be separated from the housing portion 306 (arranged on positions exposed with respect to the housing portion 306), whereby heat generated by at least one of the laser diodes 311a to 311c is transferred to the heat sinks 307 and 308 arranged to be separated from the housing portion 306 (arranged on the positions exposed with respect to the housing portion 306) through the LD plates 312a to 312c and the grease members 315. Therefore, the laser diodes 311a to 311c can be prevented from thermally interfering with each other through the housing portion 306, dissimilarly to a case where heat generated by the laser diodes 311a to 311c is transferred to the same housing portion 306. Consequently, temperature control (heat radiation or the like) of the laser diodes 311a to 311c can be prevented from becoming difficult.

According to the fourth embodiment, as hereinabove described, the LD plates 312a to 312c and the grease members 315 are provided to be in contact with the laser diodes 311a to 311c respectively, and so configured that heat generated by the laser diodes 311a to 311c can be transferred to the heat sinks 307 and 308 through the LD plates 312a to 312c and the grease members 315 in contact with the laser diodes 311a to 311c respectively. Thus, heat generated by the laser diodes 311a to 311c can be transferred to the heat sinks 307 and 308, whereby temperature control (heat radiation or the like) of the laser diodes 311a to 311c can be effectively performed.

According to the fourth embodiment, as hereinabove described, the headup display 301 is provided with the LD plate 312a arranged in contact with the laser diode 311a and the heat transfer member 309a arranged in contact with the LD plate 312a and the heat sink 307, and the housing portion 306 is so configured that the laser diode 311a is position-aligned and mounted thereon. Further, the headup display 301 includes the heat transfer member 309a including the recess portion 309d in which the laser diode 311a is arranged and the grease member 315 provided to fill up the clearance between the laser diode 311a and the recess portion 309d of the heat transfer member 309a and made of a material deformable in response to the clearance, while the recess portion 309d includes the opposed inner side surfaces 319a and 319b (opposed to each other in the direction along arrow Z) and the opposed inner side surfaces 319c and 319d (opposed to each other in the direction along arrow X) in the direction (along arrow X or Z) where the mounting position of the laser diode 311a is aligned. Thus, heat generated by the laser diode 311a can be reliably transferred to the heat sinks 307 and 308 through the grease member 315 even if the dimension or the shape of the clearance between the laser diode 311a and the recess portion 309d of the heat transfer member 309a changes due to dispersion in the mounting position of the laser diode 311a with respect to the housing portion 306 or the like. Consequently, the mounting position of the laser diode 311a with respect to the housing portion 306 can be aligned when mounting the laser diode 311a on the housing portion 306, and temperature control of the laser diode 311a can be prevented from becoming difficult.

According to the fourth embodiment, as hereinabove described, the light source device 301a further includes the LD plate 312a (the LD plates 312b and 312c) provided between the laser diode 311a and the grease member 315 and configured to be capable of transferring heat generated by the laser diode 311a (the laser diodes 311b and 311c) to the grease member 315. Thus, heat generated by the laser diode 311a can be transferred to the grease member 315 through the LD plate 312a, whereby heat generated by the laser diode 311a can be effectively transferred to the heat sinks 307 and 308.

According to the fourth embodiment, as hereinabove described, the laser diode 311a is configured to be movable so that the mounting position thereof is aligned when the laser diode 311a is mounted on the housing portion 306, while the width W11 and the height H11 (see Fig. 17) of the recess portion 309d of the heat transfer member 309a in the direction of movement of the laser diode 311a are in excess of the movable range (the lengths L11 and L12) (see Figs. 14 and 17) of the laser diode 311a. Further, the light source device 301a is so configured that the width W11 (in the direction along arrow X in Fig. 17) and the height H11 (in the direction along arrow Z in Fig. 17) between the opposed inner side surfaces 319a, 319b, 319c, 319d of the recess portion 309d are larger than the lengths L13 and L14 of the portion of the LD plate 312a arranged in the recess portion 309d in the direction (along arrow X or Z) orthogonal to the direction where the laser diode 311a emits a laser beam. Thus, the laser diode 311a can be arranged in the recess portion 309d without moving the arrangement position of the heat transfer member 309a even if the mounting position of the laser diode 311a is moved for aligning the same when the laser diode 311a is mounted on the housing portion 306.

According to the fourth embodiment, as hereinabove described, the light source device 301a includes the heat sink 307 provided in common to the heat transfer members 309a and 309b for radiating heat generated by the la ser diodes 311a and 311b, and further includes the two Peltier elements 310a and 310b, having cooling functions, provided between the respective ones of the heat transfer members 309a and 309b and the heat sink 307 correspondingly to the heat transfer members 309a and 309b. Thus, the Peltier elements 310a and 310b having cooling functions can individually cool the laser diodes 311a and 311b also when the heat sink 307 common to the heat transfer members 309a and 309b is employed, whereby the laser diodes 311a and 311b can be prevented from thermally interfering with each other through the heat sink 307.

According to the fourth embodiment, as hereinabove described, the light source device 301a is configured to further include the heat sink 308 provided to be directly in contact with the heat transfer member 309c for radiating heat generated by the single laser diode 311c. Thus, no thermal interference is caused through the heat sink 308 when the single heat transfer member 309c is provided thereon, whereby no Peltier element may be provided. Consequently, the structure of the light source device 301a can be simplified.

(Fifth Embodiment)

The structure of a headup display 302 according to a fifth embodiment of the present invention is now described with reference to Figs. 11, 18 and 19. According to the fifth embodiment, heat transfer members are configured to be so dividable that recess portions are divided along opening directions thereof.

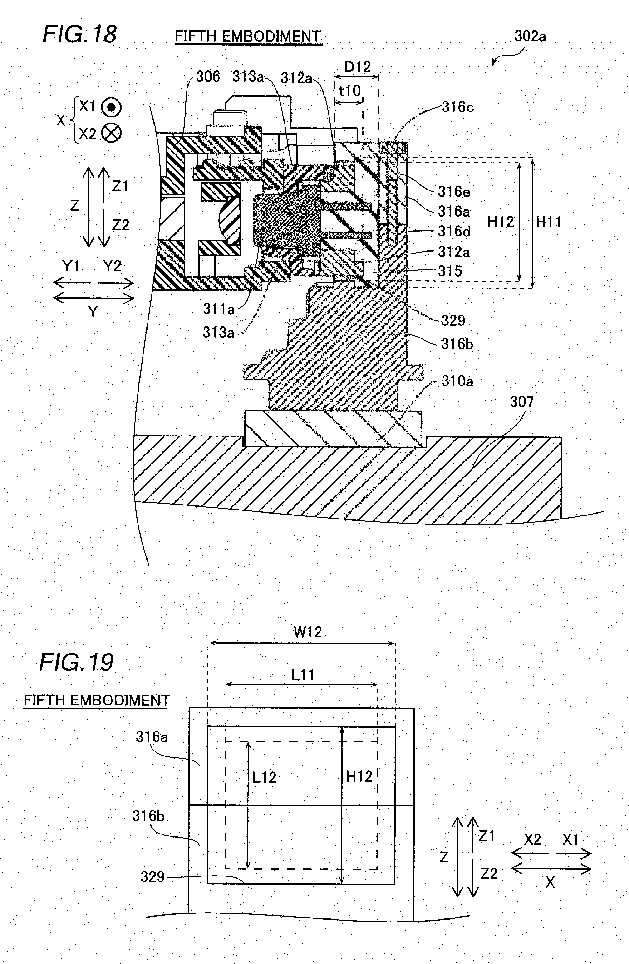

As shown in Fig. 11, the headup display 302 according to the fifth embodiment includes a light source device 302a. As shown in Fig. 18, the light source device 302a includes first and second heat transfer members 316a and 316b and a heat transfer screw 316c. The headup display 302 is an example of the "projector" in the present invention. The first heat transfer member 316a is an example of the "second heat transfer portion", the "third heat transfer portion" or the "heat transfer portion" in the present invention. The second heat transfer member 316b is also an example of the "second heat transfer portion", the "third heat transfer portion" or the "heat transfer portion" in the present invention.

As shown in Fig. 18, the second heat transfer member 316b is made of a metallic material, and the bottom surface (in the direction along arrow Z2 in Fig. 18) thereof and the upper surface of a Peltier element 310a are in surface contact with each other, and fixed to each other. The second heat transfer member 316b has an internally threaded hole portion 316d on a central portion of the upper surface (in the direction along arrow Z1 in Fig. 18) thereof, and is configured to be fittable with the heat transfer screw 316c. The first heat transfer member 316a has a through-hole portion 316e configured to be capable of receiving the heat transfer screw 316c from the upper surface (in the direction along arrow Z1 in Fig. 18) to the lower surface (in the direction along arrow Z2 in Fig. 18) of the first heat transfer member 316a. The lower surface of the first heat transfer member 316a and the upper surface of the second heat transfer member 316b are configured to be in surface contact with each other. The heat transfer screw 316c is arranged to pass through the through-hole portion 316c of the first heat transfer member 316a, and configured to fit into the hole portion 316d provided on the upper surface of the second heat transfer member 316b, thereby fixing the first and second heat transfer members 316a and 316b to each other.

As shown in Fig. 19, the first and second heat transfer members 316a and 316b are configured to form a recess portion capable of storing a laser diode 311a and an LD plate 312a, in the state where the first and second heat transfer members 316a and 316b are fixed to each other. The recess portion has a width W12, a height H12 and a depth D12 (see Fig. 18), which are in excess of a movable range of the laser diode 311a, similarly to the heat transfer member 309a (see Fig. 16) of the headup display 301 according to the fourth embodiment. In other words, the width W12, the height H12 and the depth D12 are in the following relations:

$$W12 \geq L11 \ \dots \ (8)$$

$$H12 \geq L12 \ \dots \ (9)$$

$$D12 \geq t10 \ \dots \ (10)$$

As shown in Fig. 18, the first and second heat transfer members 316a and 316b are so configured that the magnitudes (the width W12 and the height H12) of the recess portion formed by the first and second heat transfer members 316a and 316b on the side of the opening direction (along arrow Y1 in Fig. 18) thereof are smaller than the magnitudes (a width W11 and a height H11 identical to the width W11 and the height H11 of the recess portion of the heat transfer member 309a according to the fourth embodiment) in a direction (along arrow Y2 in Fig. 18) opposite to the opening direction of the recess portion. According to the fifth embodiment, the recess portion formed by the first and second heat transfer members 316a and 316b has an inner side surface 329 arranged on a side (along arrow Z2) closer to the heat sink 307 and is configured to be dividable along a direction (the opening direction (along arrow Y1 in Fig. 18) of the recess portion) parallel to the inner side surface 329. When the laser diode 311a is arranged in the recess portion formed by the first and second heat transfer members 316a and 316b, therefore, the first and second heat transfer members 316a and 316b can be combined with each other in the vertical direction (along arrow Z in Fig. 18) after the same are divided and the laser diode 311a is arranged in the recess portion.

Thus, the laser diode 311a (and the LD plate 312a) can be arranged in the recess portion by dividing the first and second heat transfer members 316a and 316b as hereinabove described, dissimilarly to the case of moving the laser diode 311a (and the LD plate 312a) in a plane direction (the direction of an X-Y plane in Fig. 16) and arranging the same in the recess portion as in the heat transfer member 309a according to the fourth embodiment. Consequently, the recess portion formed by the first and second heat transfer members 316a and 316b can be so configured that the magnitudes (the width W12 and the height H12) in the opening direction (along arrow Y1 in Fig. 18) of the recess portion are smaller than the magnitudes (the width W11 and the height H11) in the direction (along arrow Y2 in Fig. 18) opposite to the opening direction of the recess portion. Further, the quantity of the grease member 315 can be reduced due to the reduction of the magnitudes (the width W12 and the height H12) in the opening direction (along arrow Y1 in Fig. 18) of the recess portion. The remaining structures of the headup display 302 according to the fifth embodiment are similar to those of the headup display 301 according to the fourth embodiment.

According to the fifth embodiment, the following effect can be attained:

According to the fifth embodiment, as hereinabove described, the recess portion formed by the first and second heat transfer members 316a and 316b has the inner side surface 329 arranged on the side (in the direction along arrow Z2) closer to the heat sink 307 and is configured to be dividable along the direction (the opening direction (along arrow Y1 in Fig. 18) of the recess portion) parallel to the inner side surface 329. When the laser diode 311a is arranged in the recess portion formed by the first and second heat transfer members 316a and 316b, therefore, a recess portion of a divided portion of the second heat transfer member 316b can be combined after the first and second heat transfer members 316a and 316b are divided and the laser diode 311a is arranged in portions of the divided portions thereof constituting the recess portion, whereby the laser diode 311a can be easily arranged in the recess portion formed by the first and second heat transfer members 316a and 316b even if the magnitude of the opening of the recess portion is small. The remaining effects of the headup display 302 according to the fifth embodiment are similar to those of the headup display 301 according to the fourth embodiment.

(Sixth Embodiment)

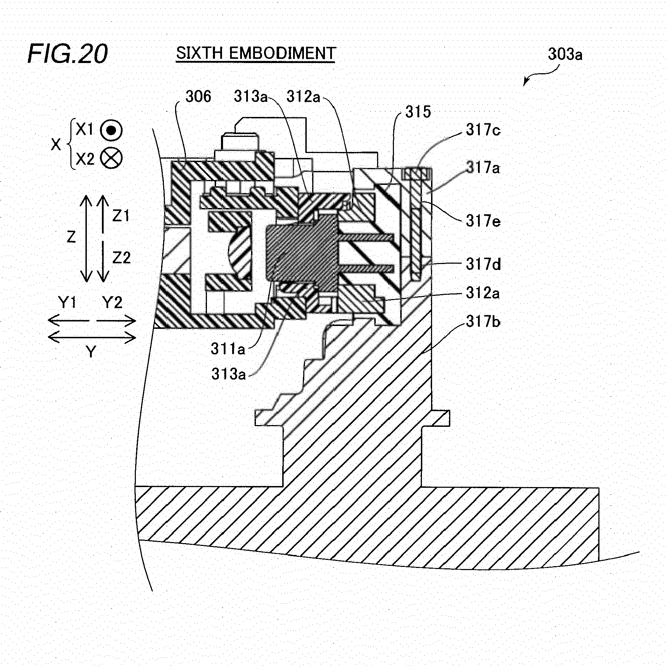

The structure of a headup display 303 according to a sixth embodiment of the present invention is now described with reference to Figs. 11 and 20. According to the sixth embodiment, a heat transfer member is at least partially formed integrally with a heat sink, dissimilarly to the headup display 301 according to the fourth embodiment in which the heat transfer members 309a to 309c and the heat sinks 307 and 308 are provided separately from each other.

As shown in Fig. 11, the headup display 303 according to the sixth embodiment includes a light source device 302a. According to the sixth embodiment, the light source device 303a includes a first heat transfer member 317a, a heat sink 317b and a heat transfer screw 317c, as shown in Fig. 20. The heat sink 317b is made of metal such as aluminum, and has a shape obtained by integrally combining the second heat transfer member 316b and the heat sink 307 (see Fig. 18) according to the fifth embodiment with each other. The headup display 303 is an example of the "projector" in the present invention. The first heat transfer member 317a is an example of the "second heat transfer portion", the "third heat transfer portion" or the "heat transfer portion" in the present invention. The heat sink 317b is an example of the "heat radiation portion" in the present invention.

As shown in Fig. 20, a hole portion 317d formed to be fittable with the heat transfer screw 317c is provided on the upper surface of the heat sink 317b. The first heat transfer member 317a has the same shape as the first heat transfer member 316a according to the fifth embodiment, and is provided with a through-hole portion 317e configured to be capable of receiving the heat transfer screw 317c from the upper surface (in the direction along arrow Z1 in Fig. 20) to the lower surface (in the direction along arrow Z2 in Fig. 20) thereof. The lower surface of the first heat transfer member 317a and the upper surface of the heat sink 317b are configured to be in surface contact with each other. The heat transfer screw 317c is arranged to pass through the through-hole portion 317e of the first heat transfer portion 317a, and configured to fit into the hole portion 317d provided on the upper surface of the heat sink 317b, thereby fixing the first heat transfer member 317a and the heat sink 317b to each other.

As shown in Fig. 20, the first heat transfer member 317a and the heat sink 317b are configured to be fixed to each other thereby forming a recess portion. The recess portion formed by the first heat transfer member 317a and the heat sink 317b is configured to have the same shape as the recess portion formed by the first and second heat transfer members 316a and 316b according to the fifth embodiment. The remaining structures of the headup display 303 according to the sixth embodiment are similar to those of the headup display 301 according to the fourth embodiment.

According to the sixth embodiment, the following effect can be attained:

According to the sixth embodiment, as hereinabove described, the second heat transfer member 316b and the heat sink 307 are integrally formed. Thus, the number of components can be reduced dissimilarly to a case of providing the second heat transfer member 316b and the heat sink 307 (see Fig. 16) separately from each other, whereby the structure of the light source device 303a can be simplified. The remaining effects of the headup display 303 according to the sixth embodiment are similar to those of the headup display 301 according to the fourth embodiment.

(Seventh Embodiment)

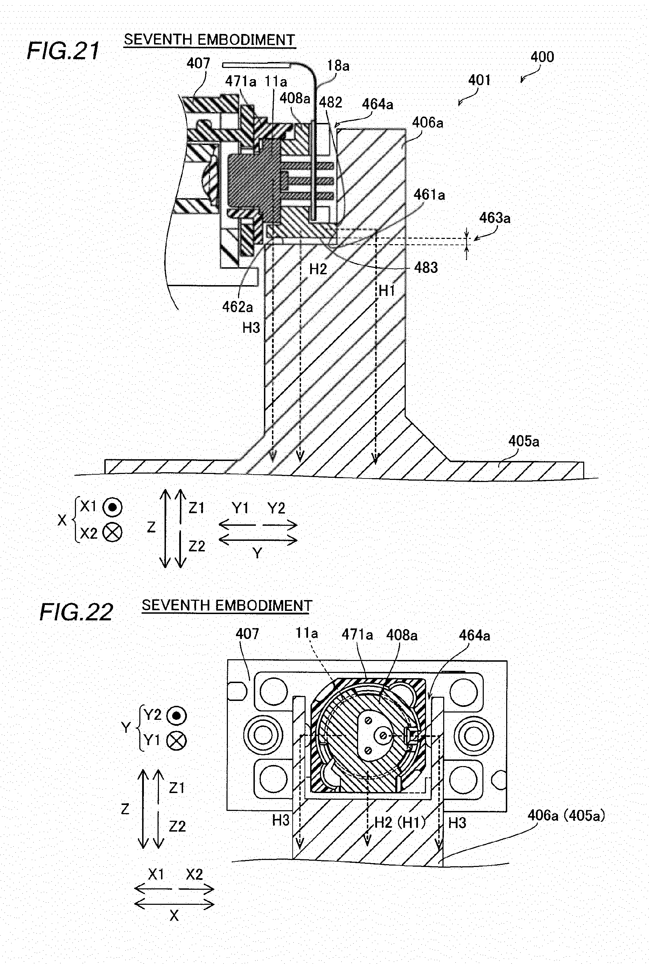

The structure of a headup display 400 according to a seventh embodiment of the present invention is now described with reference to Figs. 21 and 22. According to the seventh embodiment, a heat transfer member and a heat sink are integrally formed, dissimilarly to the headup display 100 according to the first embodiment in which the heat transfer members 6a to 6c and the heat sinks 5a and 5b are provided separately from each other.

According to the seventh embodiment, the headup display 400 includes a light source device 401, as shown in Figs. 21 and 22. The light source device 401 includes a heat sink 405a, a heat transfer member 406a, an LD plate 408a and a base portion 407, while the heat transfer member 406a and the heat sink 405a are integrally formed. The base portion 407 includes a mounting base portion 471a. The headup display 400 is an example of the "projector" in the present invention. The LD plate 408a is an example of the "first heat transfer portion" or the "heat transfer portion" in the present invention. The heat transfer member 406a is an example of the "second heat transfer portion" or the "heat transfer portion" in the present invention. The heat sink 405a is an example of the "heat radiation portion" in the present invention.

The LD plate 408a and the heat transfer member 406a are so arranged that a surface 482 of the LD plate 408a on a side along arrow Y2 (a side opposite to a direction where a laser diode 11a emits a laser beam) and a surface 461a of the heat transfer member 406a on a side along arrow Y1 are parallel to each other. The surfaces 482 and 461a are in surface contact with each other. The surface 482 is an example of the "first side surface" in the present invention. The surface 461a is an example of the "second side surface" in the present invention.

The LD plate 408a includes an outer side surface 483 in a direction along arrow Z2 (a direction perpendicular to the optical axis of the laser diode 11a). The heat transfer member 406a includes a side surface 462a opposed to the outer side surface 483 of the LD plate 408a. A clearance 463a is provided between the outer side surface 483 of the LD plate 408a and the side surface 462a of the heat transfer member 406a. The outer side surface 483 is an example of the "third side surface" in the present invention. The side surface 462a is an example of the "fourth side surface" in the present invention.

As shown in Figs. 21 and 22, the heat transfer member 406a includes a recess portion 464a having an opening toward directions along arrows Y1 and Z1. The laser diode 11a and the LD plate 408a are arranged in the recess portion 464a. Thus, the heat transfer member 406a is arranged also on the sides in the directions along arrows X1 and X2, in addition to the sides of the laser diode 11a and the LD plate 408a in the directions along arrows Y2 and Z2 according to the seventh embodiment, dissimilarly to the structure (see Fig. 6) of the headup display 100 according to the first embodiment in which the heat transfer member 6a is arranged on the sides of the laser diode 11a and the LD plate 8a in the directions along arrows Y2 and Z2.

Therefore, heat generated by the laser diode 11a is transferred to the heat sink 405a also through a path along arrow H3, in addition to a path along arrows H1 and H2 (identical to the second heat transfer path in the headup display 100 according to the first embodiment). Thus, the thermal resistance of a second heat transfer path in the headup display 400 according to the seventh embodiment is further smaller than the thermal resistance of the second heat transfer path in the headup display 100 according to the first embodiment.

The remaining structures of the headup display 400 according to the seventh embodiment are similar to those of the headup display 100 according to the first embodiment.

According to the seventh embodiment, the following effect can be attained:

According to the seventh embodiment, as hereinabove described, the heat transfer member 406a and the heat sink 405a are integrally formed. Thus, the number of components can be reduced dissimilarly to a case of providing the heat transfer member 406a and the heat sink 405a separately from each other, whereby the structure of the light source device 401 can be simplified. The remaining effects of the headup display 400 according to the seventh embodiment are similar to those of the headup display 100 according to the first embodiment.

(Eighth Embodiment)

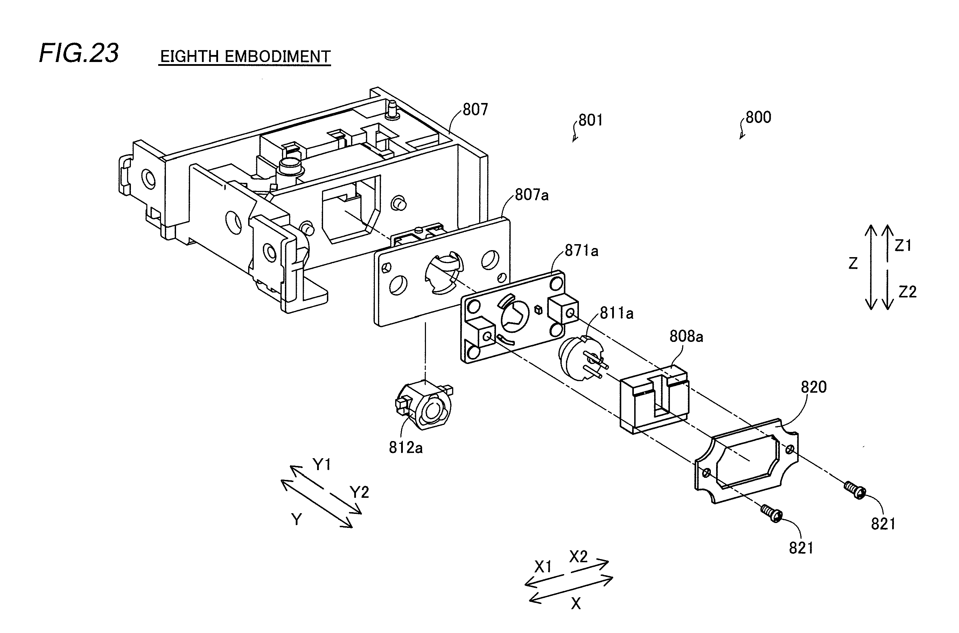

The structure of a headup display 800 according to an eighth embodiment of the present invention is now described with reference to Figs. 23 to 30. According to the eighth embodiment, a mounting base portion is provided with positioning portions (first support portion) to be in contact with the outer peripheral surface of a stem of a laser diode, and an LD plate is provided with pawl portions (second support portion) to be in contact with the outer surface of the stem of the laser diode.

As shown in Fig. 23, the headup display 800 according to the eighth embodiment is provided with a light source device 801. The light source device 801 includes a base portion 807, a lens portion 812a, a mounting base portion 871a, a laser diode 811a, an LD plate 808a and an elastic member 820. The laser diode 811a is an example of the "light source portions" in the present invention. The LD plate 811a is an example of the "first heat transfer portion" or the "heat transfer portion" in the present invention.

The base portion 807a includes a base portion-side base portion 807a. The base portion-side base portion 807a and the lens portion 812a are mounted on the base portion 807.

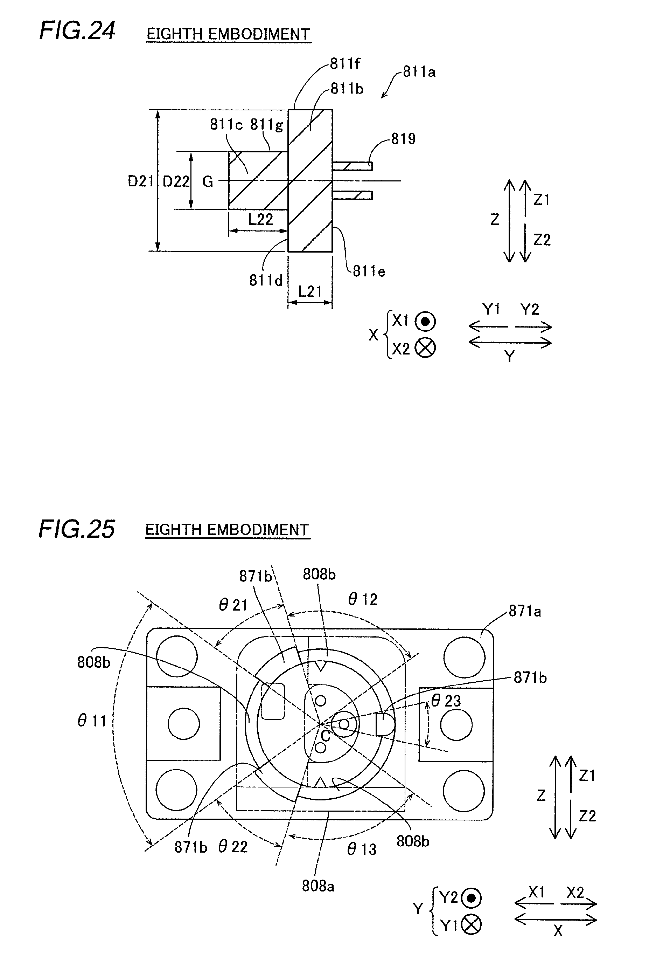

As shown in Fig. 24, the laser diode 811a includes a stem 811b, a light-emitting portion 811c and three electrodes 819. The stem 811b is provided in the form of a column having a diameter D21 and a length L21, with an optical axis G of the laser diode 811a serving as a central axis thereof.

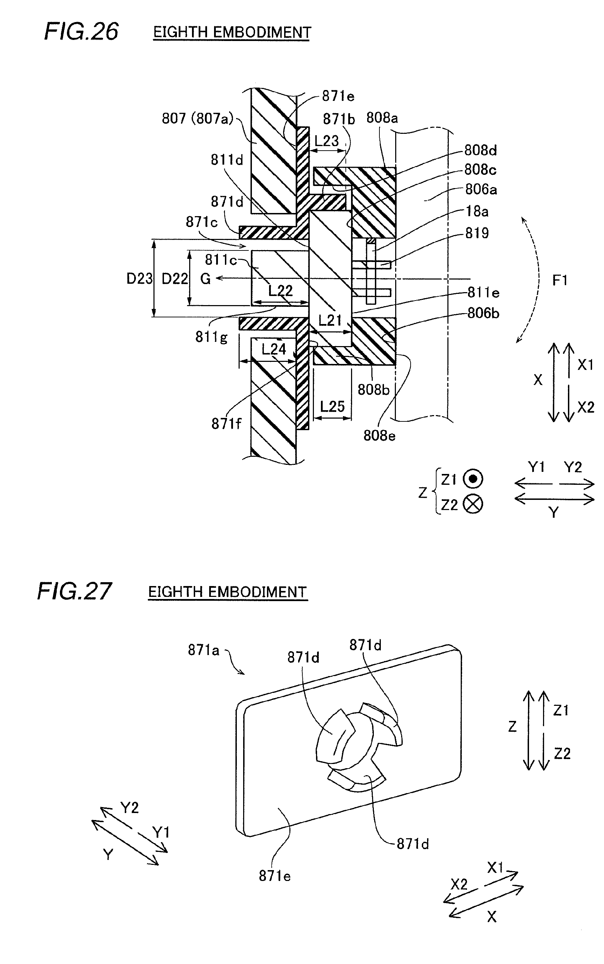

The light-emitting portion 811c is provided in the form of a column having a diameter D22 and a length L22, with the optical axis G serving as a central axis thereof. The diameter D21 is larger than the diameter D22 (D21 > D22). The three electrodes 819 (Fig. 24 shows only two of the electrodes 819) are provided to project from the stem 811b in a direction along arrow Y2 (a direction opposite to the direction where the laser diode 811a emits a laser beam). The electrodes 819 are electrically connected to a flexible printed board 18a (see Fig. 26) with solder or the like respectively.

According to the eighth embodiment, the stem 811b has a front surface 811d on the side (along arrow Y1) where the laser diode 811a emits a laser beam and a back surface 811e on a side (along arrow Y2) opposite to the direction where the laser diode 811a emits a laser beam. The stem 811b (particularly the front surface 811d) is a surface serving as the standard on dimensional accuracy of the laser diode 811a.

According to the eighth embodiment, the mounting base portion 871a includes three positioning portions 871b provided along an outer peripheral surface 811f of the stem 811b at a prescribed angular interval (of 120°, for example) to be in contact with the outer peripheral surface 811f of the stem 811b, as shown in Fig. 25. As shown in Fig. 26, the positioning portions 871b are so configured that the length L23 thereof is smaller than the length L21 of the stem 811b in the direction of the optical axis G. The positioning portions 871b are examples of the "first support portion" in the present invention.

As shown in Fig. 26, the mounting base portion 871a is provided with a through-hole 871c, capable of receiving the light-emitting portion 811c therein, having a diameter D23 larger than the diameter D22. As shown in Fig. 27, the mounting base portion 871a includes three guard portions 871d provided along the through-hole 871c at a prescribed angular interval (of 120°, for example) to have a clearance between the same and an outer peripheral surface 811g of the light-emitting portion 811c when the laser diode 811a is mounted on the mounting base portion 871a.

As shown in Fig. 26, the length L24 of the guard portions 871d is larger than the length L22 of the light-emitting portion 811c in the direction of the optical axis G. The length L24 of the guard portions 871d is larger than the length L22 of the light-emitting portion 811c and the guard portions 871d have the clearance between the same and the outer peripheral surface 811g of the light-emitting portion 811c so that the guard portions 871d can absorb impact of collision or the like not to transmit the same to the laser diode 811a even if the laser diode 811a falls or collides with another component in the state mounted on the mounting base portion 871a, whereby the laser diode 811a can be prevented from breakage or deformation.

According to the eighth embodiment, the mounting base portion 871a includes a contact surface 871a coming into contact with the base portion 870, and the contact surface 871a is arranged to be parallel to a plane (X-Z plane) on which a mounting position is aligned. The mounting base portion 871a further includes a front surface support surface 871b coming into contact with and supporting the front surface 811d of the stem 811b. Thus, the front surface 811d of the laser diode 811a and the front surface support surface 871b of the mounting base portion 871a come into contact with each other, whereby a position of the laser diode 811a with respect to a tilting direction (along arrow F1) is determined. The front surface support surface 871b is an example of the "front surface support portion" in the present invention.

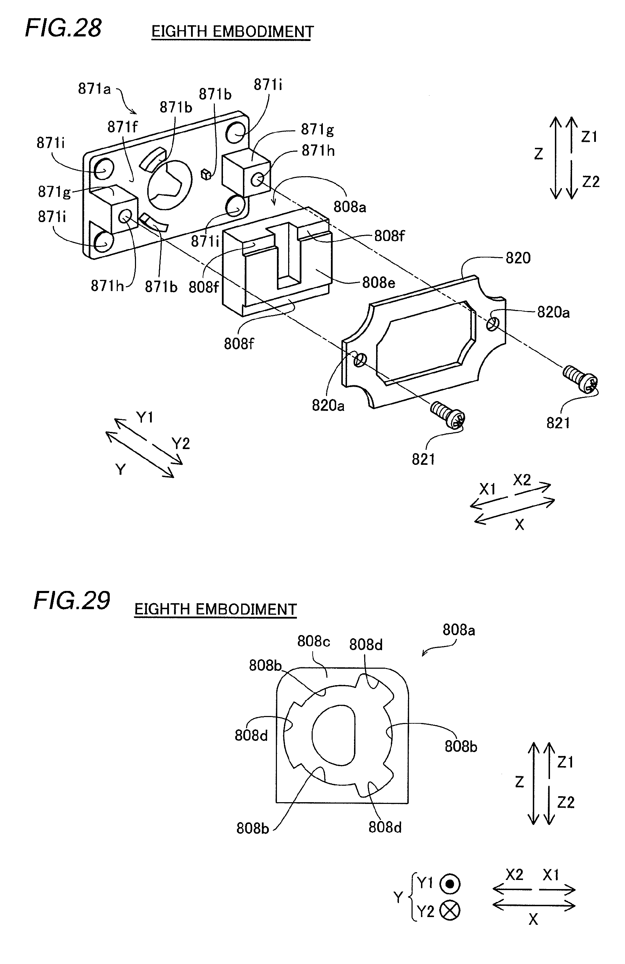

As shown in Fig. 28, the mounting base portion 871a is provided with pillar portions 871g on sides in the directions along arrows X1 and X2 respectively. The pillar portions 871g are provided with engaging portions 871h configured to be fittable with screws 821 in the direction parallel to the optical axis G.

Four protrusions 871i are provided on regions of the front surface support surface 871f not in contact with the front surface 811d. According to the eighth embodiment, the mounting base portion 871a is made of a light-transmitting material (resin) with respect to a laser beam for welding, while the base portion 807 is made of a light-shielding material (resin) with respect to the laser beam for welding. The laser beam for welding is so applied to the four protrusions 871i that the base portion 807 and the mounting base portion 871a are partially welded to each other and the mounting base portion 871a is fixed to the base portion 807.

According to the eighth embodiment, the LD plate 808a includes three pawl portions 808b provided along the outer peripheral surface 811f of the stem 811b at a prescribed angular interval (of 120°, for example) to be in contact with portions (see Fig. 25) of the outer peripheral surface 811f of the stem 811b not supported by the positioning portions 871b, as shown in Fig. 29. The three pawl portions 808b have a length L25 (see Fig. 26) in the direction parallel to the optical axis G respectively. The pawl portions 808b are examples of the "second support portion" in the present invention.

As shown in Fig. 25, the three pawl portions 808b and the three positioning portions 871b are arranged not to overlap with each other as viewed from the direction along arrow Y2. Thus, the three pawl portions 808b and the three positioning portions 871b are capable of coming into contact with the outer peripheral surface 811f of the stem 811b. According to the eighth embodiment, regions where the three pawl portions 808b come into contact with the outer peripheral surface 811f of the stem 811b are larger than regions where the three positioning portions 871b come into contact with the outer peripheral surface 811f of the stem 811b.

More specifically, the area S11 of the regions where the three pawl portions 808b come into contact with the outer peripheral surface 811f of the stem 811b is expressed as follows, assuming that $\theta 11$, $\theta 12$ and $\theta 13$ represent angles of outer peripheries where the three pawl portions 808b come into contact with the outer peripheral surface 811f of the stem 811b, as shown in Fig. 25:

$$\pi \times D21 \times (\theta 11 + \theta 12 + \theta 13)/360° \times L25$$

On the other hand, the area S12 of the regions where the three positioning portions 871b come into contact with the outer peripheral surface 811f of the stem 811b is expressed as follows, assuming that $\theta 21$, $\theta 22$ and $\theta 23$ represent angles of outer peripheries where the three positioning portions 871b come into contact with the outer peripheral surface 811f of the stem 811b:

$$\pi \times D21 \times (\theta 21 + \theta 22 + \theta 23)/360° \times L23$$

As shown in Fig. 25, the angles $\theta 11$ to $\theta 13$ and $\theta 21$ to $\theta 23$ are in the following relation:

$$(\theta 11 + \theta 12 + \theta 13) > (\theta 21 + \theta 22 + \theta 23)$$

Therefore, the area S11 is larger than the area S12 (S11 > S12) when the lengths L23 and L25 are substantially equal to each other. In this case, it follows that the pawl portions 808b are configured to be larger than the positioning portions 871b in the outer peripheral direction of the stem 811b, whereby the pawl portions 808b are larger in strength than the positioning portions 871b.

According to the eighth embodiment, the LD plate 808a includes a back surface support surface 808c coming into contact with and supporting the back surface 811e of the stem 811b, as shown in Fig. 26. As shown in Figs. 26 and 29, the LD plate 808a is provided with LD plate recess portions 808d on positions corresponding to the positioning portions 871b of the mounting base portion 871a, so that the LD plate 808a and the positioning portions 871b of the mounting base portion 871a do not interfere with each other when the LD plate 808a is mounted on the mounting base portion 871a. The back surface support surface 808c is an example of the "back surface support portion" in the present invention.

According to the eighth embodiment, the lengths L23 and L25 of the positioning portions 871b and the pawl portions 808b are smaller than the length L21 of the stem 811b in the direction of the optical axis G, as shown in Fig. 26.

According to the eighth embodiment, the mounting base portion 871a and the LD plate 808a are so arranged that the contact surface 871e of the mounting base portion 871a and a side surface 808e of the LD plate 808a are parallel to each other. The LD plate 808a and the heat transfer member 806a are so arranged that the side surface 808e of the LD plate 808a and a side surface 806b of the heat transfer member 806a are parallel to each other.

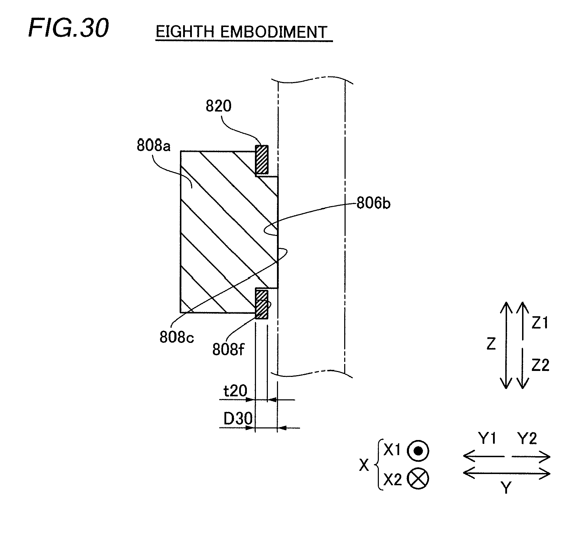

According to the eighth embodiment, the LD plate 808a is configured to be mounted on the mounting base portion 871a with the elastic member 820, as shown in Figs. 28 and 30. More specifically, the elastic member 820 consists of a plate spring, for example, and is provided in the form of a frame having four inwardly bent rectangular corner portions. The four rectangular corner portions are so bent that laser welding can be performed in a state where the elastic member 820 is mounted on the mounting base portion 871a. The elastic member 820 is provided with threaded holes 820a in directions along arrows X1 and X2 respectively. The LD plate 808a is provided with a pressing surface 808f in the direction along arrow Y2. Two screws 821 are fitted with the pillar portions 871g of the mounting base portion 871a through the threaded holes 820a, whereby the elastic member 820 is mounted on the mounting portion 871a while pressing the pressing surface 808f from the side along arrow Y2 and elastically deforming.

As shown in Fig. 30, the distance D30 between the pressing surface 808f and the side surface 806b is larger than the thickness t20 of the elastic member 820. Thus, the elastic member 820 can be arranged on the pressing surface 808f while maintaining the state where the side surface 808e of the LD plate 808a and the side surface 806b of the heat transfer member 806a are in contact with each other.

The remaining structures of the headup display 800 according to the eighth embodiment are similar to those of the headup display 100 according to the first embodiment.

A method of assembling the light source device 801 is now described with reference to Figs. 23 and 28.

The base portion-side base portion 807a and the lens portion 812a are previously mounted on the base portion 807. The stem 811b of the laser diode 811a is press-fitted into a recess portion (see Fig. 29) constituted of the three pawl portions 808b of the LD plate 808a. Then, the laser diode 811a and the LD plate 808a are integrally arranged on the mounting base portion 871a from the direction along arrow Y2 while mounting positions thereof are aligned. Then, the elastic member 820 is mounted along arrow Y2 with the two screws 821. Then, the mounting base portion 871a is laser-welded and fixed to the base portion 807.

According to the eighth embodiment, the following effects can be attained:

According to the eighth embodiment, as hereinabove described, the laser diode 811a is provided with the columnar stem 811b. The light source device 801 includes the mounting base portion 871a arranged between the laser diode 811a and the base portion 807 so that the laser diode 811a is mounted thereon. The mounting base portion 871a includes the positioning portions 871b provided along the outer peripheral surface 811f of the stem 811b at the prescribed angular interval (of 120°) to be in contact with the outer peripheral surface 811f of the stem 811b. The LD plate 808a includes the pawl portions 808b provided along the outer peripheral surface 811f of the stem 811b at the prescribed angular interval (of 120°) to be in contact with the portions of the outer peripheral surface 811f of the stem 811b not supported by the positioning portions 871b. Thus, the positioning portions 871b come into contact with the outer peripheral surface 811f of the stem 811b, whereby the mounting base portion 871a can be precisely mounted with respect to a central position of the stem 811b of the laser diode 811a. Consequently, the precision of the mounting position of the mounting base portion 871a with respect to the laser diode 811a can be improved. The pawl portions 808b come into contact with the portions of the outer peripheral surface 811f of the stem 811b not supported by the positioning portions 871b, whereby a contact area between the laser diode 811a and the LD plate 808a can be increased as compared with a case where no pawl portions 808b are provided. Thus heat generated by the laser diode 811a can be efficiently transferred to the LD plate 808a. Consequently, heat generated by the laser diode 811a can be efficiently transferred to the LD plate 808a through the pawl portions 808b while improving the precision of the mounting position of the mounting base portion 871a with respect to the laser diode 811a with the positioning portions 871b.

According to the eighth embodiment, as hereinabove described, the stem 811b is provided with the front surface 811d on the side where the laser diode 811a emits a laser beam and the back surface 811e on the side opposite thereto, the mounting base portion 871a is provided with the front surface support surface 871f coming into contact with and supporting the front surface 811d of the stem 811b, and the LD plate 808a is provided with the back surface support surface 808c coming into contact with and supporting the back surface 811e of the stem 811b. Thus, the front surface support surface 871f so comes into contact with the front surface 811d as to prevent misregistration of the laser diode 811a with respect to the mounting base portion 871a in the tilting direction, whereby the laser diode 811a can be precisely mounted with respect to the mounting base portion 871a. Further, the back surface support surface 808c so comes into contact with the back surface 811e that heat generated by the laser diode 811a can be transferred to the LD plate 808a also from the back surface support surface 808c in addition to the pawl portions 808b. Consequently, the contact area between the laser diode 811a and the LD plate 808a can be increased, whereby heat generated by the laser diode 811a can be more efficiently transferred to the LD plate 808a.

According to the eighth embodiment, as hereinabove described, the regions where the pawl portions 808b come into contact with the outer peripheral surface 811f of the stem 811b are larger than the regions where the positioning portions 871b come into contact with the outer peripheral surface 811f of the stem 811b. Thus, the regions where the pawl portions 808b come into contact with the outer peripheral surface 811f of the stem 811b can be relatively enlarged, whereby the area S11 of the regions where the pawl portions 808b (the LD plate 808a) come into contact with the outer peripheral surface 811f (the laser diode 811a) of the stem 811b is so increased that heat generated by the laser diode 811a can be further efficiently transferred to the LD plate 808a. Consequently, heat generated by the laser diode 811a can be further efficiently transferred to the LD plate 808a through the pawl portions 808b having large contact areas while improving the precision of the mounting position of the mounting base portion 871a with respect to the laser diode 811a with the positioning portions 871b.

According to the eighth embodiment, as hereinabove described, the lengths L23 and L25 of the positioning portions 871b and the pawl portions 808b are smaller than the length L21 of the stem 811b in the direction of the optical axis G of the laser diode 811a. Thus, the positioning portions 871b and the pawl portions 808b can be prevented from interfering with each other in the direction of the optical axis G of the laser diode 811a. Consequently, the laser diode 811a and the LD plate 808a can be prevented from formation of a clearance therebetween resulting from interference between the positioning portions 871b and the pawl portions 808b, whereby the laser diode 811a and the LD plate 808a can be prevented from entering a noncontact state. Thus, heat generated by the laser diode 811a can be more reliably transferred to the LD plate 808a.

According to the eighth embodiment, as hereinabove described, the mounting base portion 871a is provided with the contact surface 871e coming into contact with the base portion 807, while the mounting base portion 871a and the LD plate 808a are so arranged that the contact surface 871e of the mounting base portion 871a and the side surface 808e of the LD plate 808a are parallel to each other. Thus, the contact surface 871e and the side surfaces 806b and 808e are arranged to be parallel to each other also when the mounting base portion 871a is position-aligned with respect to the base portion 807 in a direction parallel to the contact surface 871e, whereby the state where the side surface 808e of the LD plate 808a and the side surface 806b of the heat transfer member 806a are in surface contact with each other can be maintained.

According to the eighth embodiment, as hereinabove described, the mounting base portion 871a has light transmissivity, and the base portion 806 has a light shielding property. Thus, the mounting base portion 871a can be fixed to the base portion 807 by laser welding when mounting the mounting base portion 871a on the base portion 807. Consequently, the mounting base portion 871a can be more reliably fixed to the base portion 807 in a state where the mounting base portion 871a is prevented from misregistration with respect to the base portion 807.

According to the eighth embodiment, as hereinabove described, the light source device 801 is provided with the elastic member 820 mounted on the mounting base portion 871a, and the LD plate 808a is configured to be mounted on the mounting base portion 871a with the elastic member 820. Thus, the LD plate 808a can be mounted on the mounting base portion 871a while preventing application of excess force to the LD plate 808a and the mounting base portion 871a due to elastic deformation of the elastic member 820, also when the LD plate 808a and the mounting base portion 871a are position-aligned.

The remaining effects of the headup display 800 according to the eighth embodiment are similar to those of the headup display 100 according to the first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the headup display is employed as the projector according to the present invention in each of the aforementioned first to eighth embodiments, the present invention is not restricted to this. According to the present invention, a device other than the headup display may alternatively be employed as the projector. For example, a projector projecting a laser beam on a screen different from a windshield may be employed.

While the laser diodes are employed as the light source portions according to the present invention in each of the aforementioned first to eighth embodiments, the present invention is not restricted to this. According to the present invention, devices other than the laser diodes may alternatively be employed as the light source portions. For example, light-emitting diodes (LEDs) may be employed.

While three laser diodes are employed as the plurality of light source portions according to the present invention in each of the aforementioned first to eighth embodiments, the present invention is not restricted to this. According to the present invention, laser diodes of a number other than three may alternatively be employed. For example, two or at least four laser diodes may be employed.

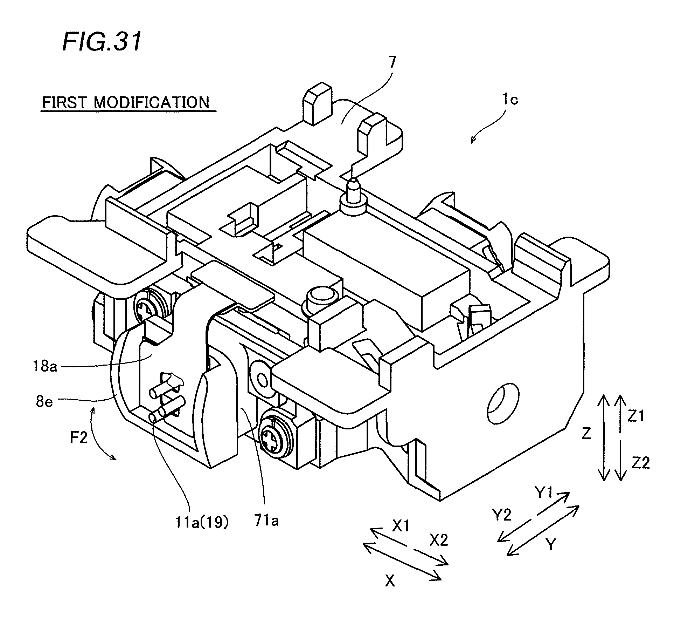

While the LD plate(s) and the heat transfer member(s) are configured to be capable of being position-aligned in the direction (along arrow X or Z) parallel to the back surface(s) of the laser diode(s) in each of the aforementioned first to eighth embodiments, the present invention is not restricted to this. According to the present invention, a side surface on a back-surface side (along arrow Y2 in Fig. 31) of an LD plate 8e may alternatively be configured to have a curved surface with respect to a height direction (along arrow Z), as in a first modification of the present invention shown in Fig. 31.

A light source device 1c according to the first modification includes the LD plate 8e, as shown in Fig. 31. The LD plate 8e is so configured that the side surface on the back-surface side (in the direction along arrow Y2 in Fig. 31) has the curved surface with respect to the height direction (along arrow Z). When mounting positions of a laser diode 11a, a mounting base portion 71a and the LD plate 8e are aligned with respect to a housing portion 7, therefore, the light-source device 1c can be so configured that a contact area between the LD plate 8e and an upper heat transfer portion 61a remains unchanged also when tilting adjustment (in the direction along arrow F2) is executed in addition to position alignment in a direction along arrow X. The LD plate 8e is an example of the "first heat transfer portion" or the "heat transfer portion" in the present invention.

While the surface of the LD plate in surface contact with the heat transfer member is provided in the U-shaped manner in each of the aforementioned first to third embodiments, the present invention is not restricted to this. According to the present invention, the surface of the LD plate in surface contact with the heat transfer member may alternatively be provided in a shape other than the U shape. For example, the surface of the LD plate in surface contact with the heat transfer member may be provided in an O-shaped manner.

While the contact surface between the laser diode and the LD plate and that between the LD plate and the heat transfer member are directly brought into surface contact with each other in each of the aforementioned first to third embodiments, the present invention is not restricted to this. According to the present invention, the contact surface between the laser diode and the LD plate and that between the LD plate and the heat transfer member may alternatively be indirectly brought into surface contact with each other through thin grease layers or the like, for example.

While the surfaces of the LD plate and the heat transfer member are partially subjected to insulation coating as the heat-shielding member according to the present invention in the aforementioned third embodiment, the present invention is not restricted to this. According to the present invention, the surfaces of the LD plate and the heat transfer member may alternatively be covered with a heat-shielding member other than the insulation coating. For example, the surfaces of the LD plate and the heat transfer member may be partially subjected to surface treatment with fluororesin.

While the three laser diodes are provided with the heat transfer members respectively in each of the aforementioned first to third embodiments, the present invention is not restricted to this. According to the present invention, the three laser diodes may not be provided with heat transfer members respectively. For example, the headup display may be configured to transfer heat generated by one of the three laser diodes to the housing portion, so that the remaining two laser diodes are provided with heat transfer members and heat generated by the remaining two laser diodes is transferred to an external device other than the housing portion.

While the recess portion of each heat transfer member is rectangularly formed as viewed from the opening direction in each of the aforementioned fourth to sixth embodiments, the present invention is not restricted to this. According to the present invention, the recess portion of the heat transfer member may alternatively be provided in a shape other than that of a rectangular parallelepiped. For example, the recess portion of the heat transfer member may be provided in a circular shape (columnar shape) as viewed from the opening direction.

While each grease member is employed as the fourth heat transfer portion according to the present invention in each of the aforementioned fourth to sixth embodiments, the present invention is not restricted to this. According to the present invention, a heat-transferable member other than the grease member may alternatively be employed as the fourth heat transfer portion. For example, heat-conductive resin or heat-conductive powdery substance may be employed.

While the heat sink having the fins is employed as the heat radiation portion in each of the aforementioned first to eighth embodiments, the present invention is not restricted to this. According to the present invention, a component other than the heat sink having the fins may alternatively be employed as the heat radiation portion. For example, a cooling plate having a water-cooled tube may be employed as the heat radiation portion.

While the element having a cooling function is employed in the case of employing the heat radiation portion provided in common to the plurality of heat transfer portions according to the present invention in each of the aforementioned fourth to sixth embodiments, the present invention is not restricted to this. According to the present invention, the element having a cooling function may alternatively be employed in a case other than that of employing the heat radiation portion provided in common to the plurality of heat transfer portions. For example, the element having a cooling function may be employed in a case of employing a heat radiation portion provided with respect to one heat transfer portion. Also in the case of employing the heat radiation portion provided in common to the plurality of heat transfer portions, no element having a cooling function may be employed if the heat transfer portions do not thermally interfere with each other.

While the heat transfer member is configured to be dividable into two portions along the opening direction of the recess portion in each of the aforementioned fifth and sixth embodiments, the present invention is not restricted to this. According to the present invention, the heat transfer member may alternatively be configured to be dividable into a number other than two. For example, the heat transfer member may be configured to be dividable into at least three portions.

While the mounting base portion is made of resin in each of the aforementioned first to eighth embodiments, the present invention is not restricted to this. According to the present invention, a mounting base portion 771a may alternatively be made of a material such as metal higher in heat conductivity than general resin, as in a second modification of the present invention shown in Fig. 5.

As shown in Fig. 5, a light source device 701 according to the second modification includes the mounting base portion 771a arranged between a laser diode 11a and a housing portion 7 and mounted on the housing portion 7 integrally with the laser diode 11a. The mounting base portion 771a is higher in heat conductivity than the housing portion 7. In other words, the mounting base portion 771 is made of a material higher in heat conductivity than the material (resin) for the housing portion 7. For example, the mounting base portion 771a is made of metal. The laser diode 11a is press-fitted into the mounting base portion 771a, whereby the laser diode 11a and the mounting base portion 771a are fixed to each other. Mounting base portions 771b and 771c are configured similarly to the mounting base portion 771a.

According to the second modification, the mounting base portions 771a to 771c are configured to be higher in heat conductivity than the housing portion 7 (the mounting base portions 771a to 771c are made of metal, for example), whereby a press-fitting engaging method can be employed when mounting (fixing) the laser diode 11a on (to) the housing portion 7 (the mounting base portions 771a to 771c). Consequently, the laser diode 11a can be prevented from misregistration or inclination resulting from thermal expansion since the press-fitting engaging method results in a smaller thermal expansion coefficient as compared with a method of mounting the laser diode 11a on the housing portion 7 (or the mounting base portions 771a to 771c) with an adhesive.

While the first heat transfer portion is mounted on the mounting base portion with the elastic member in the aforementioned eighth embodiment, the present invention is not restricted to this. According to the present invention, the first heat transfer portion may alternatively be mounted on the mounting base portion with a member other than the elastic member. For example, the first heat transfer portion may be mounted on the mounting base portion with an adhesive. However, the adhesive may change over time, and hence the elastic member hardly changing over time is preferably employed, as in the eighth embodiment.

While the elastic member is fixed to the mounting base portion with the screws while pressing the first heat transfer portion thereby fixing the first heat transfer portion to the mounting base portion in the aforementioned eighth embodiment, the present invention is not restricted to this. According to the present invention, the elastic member may alternatively be fixed to the first heat transfer portion with screws while pressing the mounting base portion, thereby fixing the first heat transfer portion to the mounting base portion.

**Claims**

1.   A projector (100-102, 301-303, 400, 800) comprising:

a plurality of light source portions (11a-11c, 311a-311c, 811a);
an optical scanning portion (3, 301c, 301d) reflecting and scanning light emitted from the light source portions;
a base portion (7, 7a, 306, 407, 807) mounted with the light source portions; and
a heat transfer portion (6a-6d, 8a-8c, 309a-309c, 312a-312c, 315, 316a, 316b, 317a, 406a, 408a, 806a, 808a) that contacts with the light source portions, wherein
the thermal resistance of a first heat transfer path from the light source portions to the base portion is larger than the thermal resistance of a second heat transfer path from the light source portions to the heat transfer portion.

2.   The projector according to claim 1, further comprising a mounting base portion (771a-771c) arranged between the light source portions and the base portion and mounted on the base portion integrally with the light source portions, wherein
the thermal resistance of the mounting base portion is smaller than the thermal resistance of the base portion.

3.   The projector according to claim 1 or 2, further comprising a heat radiation portion (307, 308) arranged at a position separated from the base portion, wherein
the heat transfer portion includes a first heat transfer portion (312a-312c) that contacts with the light source portions, and a second heat transfer portion (309a-309c, 315, 316a, 316b, 317a) that contacts with the first heat transfer portion and the heat radiation portion,
the light source portions are position-aligned and mounted on the base portion,
the second heat transfer portion includes a third heat transfer portion (309a-309c, 316a, 316b, 317a) including a recess portion (309d) in which the first heat transfer portion is at least partially arranged and a fourth heat transfer portion (315) provided to fill up a clearance between the first heat transfer portion and the recess portion and made of a material deformable in response to the clearance, and
the recess portion has inner side surfaces (319a-319d, 329) opposed to each other in a direction where mounting positions of the light source portions are aligned.

4.   The projector according to claim 3, wherein
the recess portion of the third heat transfer portion is dividable along a direction parallel to the inner side surface arranged on the side of the heat radiation portion.

5.   The projector according to claim 3 or 4, wherein
at least part of the third heat transfer portion and the heat radiation portion are integrally formed.

6.   The projector according to claim 1 or 2, further comprising a heat radiation portion (5a, 5b, 405a) arranged at a position separated from the base portion, wherein

the heat transfer portion includes a first heat transfer portion (8a-8c, 408a, 808a) that contacts with the light source portions, and a second heat transfer portion (6a-6d, 406a, 806a) that contacts with the first heat transfer portion and the heat radiation portion,
the light source portions are position-aligned and mounted on the base portion,
the first heat transfer portion includes a first side surface (82, 482, 808c) in a direction opposite to the direction where the light source portions emit light,
the second heat transfer portion includes a second side surface (161a, 806b) parallel to the first side surface, and the first heat transfer portion and the second heat transfer portion are arranged in a state where the first side surface and the second side surface are in surface contact with each other.

7. The projector according to claim 6, wherein
the first heat transfer portion includes a third side surface (83, 483) which is an outer surface in a direction perpendicular to the optical axes of the light source portions,
the second heat transfer portion includes a fourth side surface (162a, 462a) which is an inner side surface opposed to the third side surface, and
a clearance (63a, 463a) is provided between the third side surface and the fourth side surface.

8. The projector according to claim 6 or 7, wherein
the light source portions have columnar stems (811b), the projector further comprises a mounting base portion (871a) arranged between the light source portions and the base portion and mounted with the light source portions,
the mounting base portion includes a first support portion (871b) provided at a prescribed angular interval along the outer peripheral surfaces (811f) of the stems to be in contact with the outer peripheral surfaces of the stems, and
the first heat transfer portion includes a second support portion (808b) provided at a prescribed angular interval along the outer peripheral surfaces of the stems to be in contact with portions of the outer peripheral surfaces of the stems not supported by the first support portion.

9. The projector according to claim 8, wherein
the stems have front surfaces (811d) on the side where the light source portions emit light and back surfaces (811e) on the side opposite to the direction where the light source portions emit light,
the mounting base portion includes a front surface support portion (871f) coming into contact with and supporting the front surfaces of the stems, and
the first heat transfer portion includes a back surface support portion (808c) coming into contact with and supporting the back surfaces of the stems.

10. The projector according to claim 8 or 9, wherein
a region where the second support portion is in contact with the outer peripheral surfaces of the stems is larger than a region where the first support portion is in contact with the outer peripheral surfaces of the stems.

11. The projector according to any of claims 8 to 10, wherein
the length of the first support portion and the length of the second support portion are both smaller than the length of the stems in the direction of the optical axes of the light source portions.

12. The projector according to any of claims 8 to 11, wherein
the mounting base portion includes a contact surface (871e) coming into contact with the base portion, and
the mounting base portion and the first heat transfer portion are arranged to parallelize the contact surface of the mounting base portion and the first side surface of the first heat transfer portion to each other.

13. The projector according to any of claims 8 to 12, wherein
the mounting base portion has light transmissivity, and the base portion has a light shielding property.

14. The projector according to any of claims 8 to 13, further comprising an elastic member (820) mounted on the mounting base portion, wherein
the first heat transfer portion is mounted on the mounting base portion by the elastic member.

15. The projector according to any of claims 1 to 14, further comprising a heat radiation portion (5a, 5b, 405a) arranged at a position separated from the base portion, wherein
the heat transfer portion includes a first heat transfer portion (8d) that contacts with the light source portions, and a second heat transfer portion (6e) that contacts with the first heat transfer portion and the heat radiation portion,

the heat radiation portion includes an element (16a) having a cooling function, and
surfaces of the first heat transfer portion excluding the boundary surface between the first heat transfer portion and the light source portions or a surface of the second heat transfer portion excluding the boundary surface between the second heat transfer portion and the first heat transfer portion is at least partially covered with a heat shielding member.

*FIG.1* <u>FIRST EMBODIMENT (SECOND & THIRD EMBODIMENTS)</u>

*FIG.2*  <u>FIRST EMBODIMENT (SECOND & THIRD EMBODIMENTS)</u>

*FIG.3*   FIRST EMBODIMENT

## FIG.4

FIRST EMBODIMENT

*FIG.5*

FIRST EMBODIMENT
(SECOND MODIFICATION)

EP 2 908 174 A1

FIG.6  FIRST EMBODIMENT

FIG.7

FIRST EMBODIMENT

FIG.8 SECOND EMBODIMENT

FIG.9 SECOND EMBODIMENT

FIG.10

THIRD EMBODIMENT

## FIG.11    FOURTH EMBODIMENT (FIFTH & SIXTH EMBODIMENTS)

*FIG.12*  FOURTH EMBODIMENT (FIFTH & SIXTH EMBODIMENTS)

*FIG.13*  FOURTH EMBODIMENT

FIG.14 FOURTH EMBODIMENT

## FIG.15

FOURTH EMBODIMENT

## FIG.16 FOURTH EMBODIMENT

## FIG.17
### FOURTH EMBODIMENT

*FIG.18*  FIFTH EMBODIMENT

*FIG.19*

FIFTH EMBODIMENT

FIG.20    SIXTH EMBODIMENT

*FIG.21* <u>SEVENTH EMBODIMENT</u>

407   471a 11a   18a   400
      408a 482 464a   401
                      406a

461a

463a

483

462a   H2   H1
H3

405a

X { X1 ⊙
    X2 ⊗ }

Z { Z1
    Z2 }

Y1  Y2
Y

*FIG.22* <u>SEVENTH EMBODIMENT</u>

407   11a  471a 408a   464a

Y { Y2 ⊙
    Y1 ⊗ }

Z { Z1
    Z2 }

H3   H2 (H1)   H3   406a (405a)

X1  X2
X

*FIG.23*   EIGHTH EMBODIMENT

807

801

800

807a

871a

811a

808a

820

812a

821

821

Z1

Z

Z2

Y1

Y2

Y

X1

X2

X

EP 2 908 174 A1

## FIG.24    EIGHTH EMBODIMENT

## FIG.25    EIGHTH EMBODIMENT

FIG.26    EIGHTH EMBODIMENT

FIG.27    EIGHTH EMBODIMENT

*FIG.28*    EIGHTH EMBODIMENT

871a
871f  871b  871b  871i
871i  871g
871g  871h
871i  808a
871b  871i  808f
871h  871b  808f  808e
808f  820
820a
820a  821
821

Z1
Z
Z2

Y1
Y2
Y

X1  X2
X

*FIG.29*    EIGHTH EMBODIMENT

808c  808d  808a
808b
808d
808b
808b  808d

Z1
Z
Z2

Y { Y1 ⊙   Y2 ⊗ }

X2  X1
X

*FIG.30*   EIGHTH EMBODIMENT

820

808a

806b

808c

808f

t20

D30

Z1
Z
Z2

X { X1 ⊙
    X2 ⊗

Y1   Y2

Y

*FIG.31*

FIRST MODIFICATION

7

1c

18a

8e

F2

11a(19)    71a

Z1
Z
Z2

Y1
Y2
Y

X1
X2
X

Europäisches
Patentamt

European
Patent Office

Office européen
des brevets

## EUROPEAN SEARCH REPORT

**Application Number**

EP 15 15 5002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/242265 A1 (KATO SEIICHI [JP] ET AL) 19 September 2013 (2013-09-19) * paragraphs [0041] - [0069]; figures 6,7 * | 1,2,6-15 | INV. G03B21/16 G02B27/01 |
| X | JP 2009 288484 A (NIPPON SEIKI CO LTD) 10 December 2009 (2009-12-10) | 1 | |
| Y | * abstract * | 3-5 | |
| Y | US 2010/271783 A1 (MIYASHITA TOMOAKI [JP]) 28 October 2010 (2010-10-28) * paragraphs [0060] - [0068]; figures 4,5 * | 3-5 | |
| X | US 2007/064174 A1 (KITAMURA ATSUSHI [JP] ET AL) 22 March 2007 (2007-03-22) * paragraphs [0020] - [0029] * | 1 | |
| X | US 2012/300486 A1 (MATSUSHITA JUNICHI [JP] ET AL) 29 November 2012 (2012-11-29) * paragraphs [0022] - [0050] * | 1 | TECHNICAL FIELDS SEARCHED (IPC) |
| X | US 2005/117346 A1 (MORINAGA KENICHI [JP]) 2 June 2005 (2005-06-02) * paragraphs [0038] - [0044] * | 1,2 | G03B G02B |
| A,P | EP 2 784 580 A1 (FUNAI ELECTRIC CO [JP]) 1 October 2014 (2014-10-01) * paragraphs [0032] - [0089] * | 1 | |

The present search report has been drawn up for all claims

| Place of search | Date of completion of the search | Examiner |
|---|---|---|
| Munich | 15 June 2015 | Stemmer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 15 5002

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2015

| Patent document cited in search report | | Publication date | Patent family member(s) | | Publication date |
|---|---|---|---|---|---|
| US 2013242265 | A1 | 19-09-2013 | CN 103309033 A | | 18-09-2013 |
| | | | JP 2013190594 A | | 26-09-2013 |
| | | | US 2013242265 A1 | | 19-09-2013 |
| JP 2009288484 | A | 10-12-2009 | NONE | | |
| US 2010271783 | A1 | 28-10-2010 | CN 101872080 A | | 27-10-2010 |
| | | | JP 5504683 B2 | | 28-05-2014 |
| | | | JP 2010256654 A | | 11-11-2010 |
| | | | US 2010271783 A1 | | 28-10-2010 |
| US 2007064174 | A1 | 22-03-2007 | JP 4671117 B2 | | 13-04-2011 |
| | | | JP 2007087792 A | | 05-04-2007 |
| | | | US 2007064174 A1 | | 22-03-2007 |
| US 2012300486 | A1 | 29-11-2012 | EP 2538134 A1 | | 26-12-2012 |
| | | | JP 2011165624 A | | 25-08-2011 |
| | | | US 2012300486 A1 | | 29-11-2012 |
| | | | WO 2011099633 A1 | | 18-08-2011 |
| US 2005117346 | A1 | 02-06-2005 | JP 3846728 B2 | | 15-11-2006 |
| | | | JP 2005157083 A | | 16-06-2005 |
| | | | US 2005117346 A1 | | 02-06-2005 |
| EP 2784580 | A1 | 01-10-2014 | EP 2784580 A1 | | 01-10-2014 |
| | | | US 2014293239 A1 | | 02-10-2014 |

EPO FORM P0459

For more details about this annex : see Official Journal of the European Patent Office, No. 12/82

**EP 2 908 174 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006118037 A